# EUROPEAN PATENT APPLICATION

(11) **EP 4 561 217 A1**
(43) Date of publication of application: **28.05.2025**
(21) Application number: 22951462.5
(22) Date of filing: 19.07.2022
(51) Int. Cl.: H04W 72/04

(54) **UPLINK DEMODULATION REFERENCE SIGNAL PORT DETERMINATION METHOD AND APPARATUS THEREOF**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/106581
(87) International publication number: WO 2024/016184

(57) **Abstract**

Disclosed in embodiments of the present disclosure are an uplink demodulation reference signal (DMRS) port determination method and an apparatus thereof, which can be applied to systems such as an NR. The method comprises: a terminal device having a multi-antenna panel receives, on the basis of uplink simultaneous transmission STxMP in a space division multiplexing (SDM) mode scheduled by single downlink control information (DCI), DMRS port allocation information indicating a plurality of DMRS ports and allocated by a network side device to the terminal device according to a DMRS port allocation table, wherein the DMRS port allocation information is used for determining DMRS port information respectively corresponding to associated different panels that use physical uplink shared channel (PUSCH) transmission opportunities on different beams for different transmission reception points (TRPs), and the DMRS port information respectively corresponding to different panels that use the PUSCH transmission opportunities on different beams for different TRPs belongs to a same code division multiplexing (CDM) group or belongs to different CDM groups.

## Description

### TECHNICAL FIELD

The present disclosure relates to a field of communication technology, and specifically to a method and an apparatus for determining an uplink demodulation reference signal (DMRS) port.

### BACKGROUND

Coordinated Multiple Point transmission (CoMP) continues to be an important technology in a 5G New Radio (NR) communication system, which may improve coverage of a cell edge and provide a more balanced quality of service in a service area. From the perspective of a network topology, a network deployment is carried out by means of a large number of distributed access points and basebands for centralized processing, which is more conducive to providing a balanced user experience rate, and significantly reducing a delay and a signaling overhead caused by a cell handover. With the increase of the frequency band, a relatively dense access point deployment is also required from the perspective of ensuring the network coverage. In a high frequency band, with the improvement of integration of active antenna devices, a modular active antenna array is more likely to be used. An antenna array at each transmission reception point (TRP) may be divided into several relatively independent antenna panels, so a shape of the entire array and a number of ports in the entire array may be flexibly adjusted according to deployment scenarios and service requirements. The antenna panels or TRPs may also be connected by optical fibers for a more flexible distributed deployment. In a millimeter wave band, as the wavelength decreases, a blocking effect caused by obstacles such as a human body or a vehicle will be more significant. In this case, from the perspective of ensuring the robustness of a link connection, a coordination among multi-TRP or multi-panel may also be used to transmit/receive a plurality of beams from a plurality of angles, which reduces the adverse impact of the blocking effect.

### SUMMARY

The embodiments of the present disclosure provide a method and an apparatus for determining an uplink demodulation reference signal (DMRS) port, which may be applied to a new radio (NR) system, etc., and may solve the problem of how to support a higher throughput and a more reliable transmission performance by uplink simultaneous transmission with multiple panels or multiple TRPs.

According to a first aspect of embodiments of the present disclosure, a method for determining an uplink DMRS port is provided, executed by a terminal with multiple panels, including: receiving DMRS port allocation information for indicating a plurality of DMRS ports, based on uplink simultaneous transmission via multi-panel (STxMP) in a space division multiplexing (SDM) mode scheduled by single downlink control information (DCI), in which the DMRS port allocation information is allocated by a network device for the terminal according to a DMRS port allocation table, the DMRS port allocation information is configured to determine DMRS port information corresponding to physical uplink shared channel (PUSCH) transmission occasions associated with different panels towards different transmission reception points (TRPs) using different beams, in which the DMRS port information corresponding to the PUSCH transmission occasions associated with different panels towards different TRPs using different beams belongs to a same code division multiplexing (CDM) group or different CDM groups.

In this technical solution, the DMRS port allocation information for indicating the plurality of DMRS ports is allocated for the terminal based on the multiple panels, so that the terminal may determine the DMRS port information corresponding to the PUSCH transmission occasions associated with different panels towards different TRPs using different beams, so as to realize an enhancement of a flexible allocation indication of the DMRS port that may support a single-user multiple-input multiple-output (SU-MIMO) and a multi-user multiple-input multiple-output (MU-MIMO) in the SDM transmission multiplexing mode, thus providing a solution of the uplink STxMP based on single DCI, and solving the problem of how to support a higher throughput and a more reliable transmission performance by the uplink simultaneous transmission with multiple panels or multiple TRPs in the uplink enhancement of the version Rel-18.

In one implementation, the single DCI further includes an antenna port indication field, and the antenna port indication field may also indicate a total number of transmission ranks (RANKs) for transmitting a PUSCH, and the total number of RANKs is greater than 1; and the method further includes: determining DMRS port information configured for the PUSCH at the PUSCH transmission occasions associated with different panels towards different TRPs using different beams according to the antenna port indication field and the DMRS port allocation information.

In one possible implementation, there are two PUSCH transmission occasions for the PUSCH associated with different panels towards different TRPs using different beams, and the DMRS port allocation information includes at least a DMRS port set allocated for the terminal, in which determining the DMRS port information configured for the PUSCH at the PUSCH transmission occasions associated with different panels towards different TRPs using different beams according to the antenna port indication field and the DMRS port allocation information, includes: determining a number of DMRS ports allocated to a first PUSCH transmission occasion and a number of DMRS ports allocated to a second PUSCH transmission occasion in sequence in a default manner according to the DMRS port set, in which the two PUSCH transmission occasions do not support a first RANK combination, and the total number of RANKs indicated by the antenna port indication field is 2 or 4.

In one possible implementation, there are two PUSCH transmission occasions for the PUSCH associated with different panels to different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions, in which determining the DMRS port information configured for the PUSCH at the PUSCH transmission occasions associated with different panels towards different TRPs using different beams according to the antenna port indication field and the DMRS port allocation information, includes: determining a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions do not support a first RANK combination, and the total number of RANKs indicated by the antenna port indication field is 3.

In one possible implementation, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions.

In one possible implementation, there are two PUSCH transmission occasions for the PUSCH associated with different panels towards different TRPs using different beams, in which determining the DMRS port information configured for the PUSCH at the PUSCH transmission occasions associated with different panels towards different TRPs using different beams according to the antenna port indication field and the DMRS port allocation information, includes: determining a number of DMRS ports allocated to a first PUSCH transmission occasion and a number of DMRS ports allocated to a second PUSCH transmission occasion in sequence according to the DMRS port set and the mapping relationship, in which the two PUSCH transmission occasions do not support a first RANK combination, and the total number of RANKs indicated by the antenna port indication field is 3.

In one possible implementation, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

In one possible implementation, there are two PUSCH transmission occasions for the PUSCH associated with different panels towards different TRPs using different beams, in which determining the DMRS port information configured for the PUSCH at the PUSCH transmission occasions associated with different panels towards different TRPs using different beams according to the antenna port indication field and the DMRS port allocation information, includes: determining DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which two PUSCH transmission occasions do not support a first RANK combination, and the total number of RANKs indicated by the antenna port indication field is 3.

In one implementation, there are two PUSCH transmission occasions for the PUSCH associated with different panels towards different TRPs using different beams, and the DMRS port allocation information includes at least a DMRS port set allocated for the terminal, in which determining the DMRS port information configured for the PUSCH at the PUSCH transmission occasions associated with different panels towards different TRPs using different beams according to the antenna port indication field and the DMRS port allocation information, includes: determining a number of DMRS ports allocated to a first PUSCH transmission occasion and a number of DMRS ports allocated to a second PUSCH transmission occasion in sequence in a default manner according to the DMRS port set, in which the two PUSCH transmission occasions support a first RANK combination, and the total number of RANKs indicated by the antenna port indication field is 2.

In one implementation, there are two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions, in which determining the DMRS port information configured for the PUSCH at the PUSCH transmission occasions associated with different panels towards different TRPs using different beams according to the antenna port indication field and the DMRS port allocation information, includes: determining a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions support a first RANK combination, and the total number of RANKs indicated by the antenna port indication field is 3 or 4.

In one possible implementation, there are two PUSCH transmission occasions for the PUSCH associated with different panels to different TRPs using different beams, in which determining the DMRS port information configured for the PUSCH at the PUSCH transmission occasions associated with different panels towards different TRPs using different beams according to the antenna port indication field and the DMRS port allocation information, includes: determining a number of DMRS ports allocated to a first PUSCH transmission occasion and a number of DMRS ports allocated to a second PUSCH transmission occasion according to the DMRS port set and the mapping relationship, when the plurality of DMRS ports are allocated in sequence to the first and second PUSCH transmission occasions, in which the two PUSCH transmission occasions support a first RANK combination, and the total number of RANKs indicated by the antenna port indication field is 3 or 4.

In one possible implementation, there are two PUSCH transmission occasions for the PUSCH associated with different panels to different TRPs using different beams, in which determining the DMRS port information configured for the PUSCH at the PUSCH transmission occasions associated with different panels towards different TRPs using different beams according to the antenna port indication field and the DMRS port allocation information, includes: determining DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which the two PUSCH transmission occasions support a first RANK combination, and the total number of RANKs indicated by the antenna port indication field is 3 or 4.

In one possible implementation, the first RANK combination is a RANK combination of 1+3 or a RANK combination of 3+1.

In one implementation, the single DCI further includes at least one indication field for sounding reference signal (SRS) resource indicator (SRI) and/or transmitted precoding matrix indicator (TPMI), or an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one possible implementation, the method further includes: determining DMRS port information configured for the PUSCH at PUSCH transmission occasions associated with different panels towards different TRPs using different beams according to the at least one indication field for SRI and/or TPMI and the antenna port indication field.

In one possible implementation, there are two PUSCH transmission occasions for the PUSCH associated with different panels to different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second indication field for SRI and/or TPMI indicates a number of RANKs corresponding to a second PUSCH transmission occasion.

In one possible implementation, determining DMRS port information configured for the PUSCH at PUSCH transmission occasions associated with different panels towards different TRPs using different beams according to the at least one indication field for SRI and/or TPMI and the antenna port indication field includes: determining RANK combinations supported by the two PUSCH transmission occasions according to the number of RANKs corresponding to the first PUSCH transmission occasion indicated by the first indication field for SRI and/or TPMI and the number of RANKs corresponding to the second PUSCH transmission occasion indicated by the second indication field for SRI and/or TPMI; and determining DMRS port information allocated to the first PUSCH transmission occasion and DMRS port information allocated to the second PUSCH transmission occasion according to the RANK combinations supported by the two PUSCH transmission occasions and the DMRS port set allocated for the terminal indicated by the antenna port indication field.

In one possible implementation, there are two PUSCH transmission occasions for the PUSCH associated with different panels to different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

In one possible implementation, determining DMRS port information configured for the PUSCH at PUSCH transmission occasions associated with different panels towards different TRPs using different beams according to the at least one indication field for SRI and/or TPMI and the antenna port indication field includes: determining DMRS port information allocated to the first PUSCH transmission occasion and DMRS port information allocated to the second PUSCH transmission occasion in a pre-defined manner according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set.

In one possible implementation, determining DMRS port information configured for the PUSCH at PUSCH transmission occasions associated with different panels towards different TRPs using different beams according to the at least one indication field for SRI and/or TPMI and the antenna port indication field includes: determining DMRS port information allocated to the first PUSCH transmission occasion and DMRS port information allocated to the second PUSCH transmission occasion according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, the DMRS port set allocated for the terminal indicated by the antenna port indication field, and the DMRS port occupied by the first PUSCH transmission occasion indicated by the additional indication information.

According to a second aspect of embodiments of the present disclosure, a method for determining an uplink DMRS port is provided, executed by a network device, including: allocating DMRS port allocation information for indicating a plurality of DMRS ports, in which the DMRS port allocation information is allocated for a terminal with multiple panels according to a DMRS port allocation table; and sending single DCI to the terminal, in which the single DCI includes the DMRS port allocation information, and the DMRS port allocation information is configured to determine DMRS port information corresponding to PUSCH transmission occasions associated with different panels towards different TRPs using different beams, in which the DMRS port information corresponding to the PUSCH transmission occasions associated with different panels towards different TRPs using different beams belongs to a same CDM group or different CDM groups.

In this technical solution, the network device may allocate the DMRS port allocation information for indicating the plurality of DMRS ports for the terminal based on the multiple panels, so that the terminal may determine the DMRS port information corresponding to the PUSCH transmission occasions associated with different panels towards different TRPs using different beams, so as to realize an enhancement of a flexible allocation indication of the DMRS port that may support an SU-MIMO and an MU-MIMO in the SDM transmission multiplexing mode, thus providing a solution of the uplink STxMP based on single DCI, and solving the problem of how to support a higher throughput and a more reliable transmission performance by the uplink simultaneous transmission with multiple panels or multiple TRPs in the uplink enhancement of the version Rel-18.

In one implementation, the single DCI further includes an antenna port indication field, and the antenna port indication field indicates a total number of transmission RANKs for transmitting a PUSCH, and the total number of RANKs is greater than 1.

In one possible implementation, there are two PUSCH transmission occasions for the PUSCH associated with different panels towards different TRPs using different beams, and the DMRS port allocation information includes at least a DMRS port set allocated for the terminal.

In one possible implementation, there are two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions.

In one possible implementation, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions.

In one possible implementation, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

In one possible implementation, the single DCI further includes at least one indication field for SRI and/or TPMI, and an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one possible implementation, there are two PUSCH transmission occasions for the PUSCH associated with different panels towards different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second SRI and/or a second TPMI indication field indicates a number of RANKs corresponding to a second PUSCH transmission occasion.

In one possible implementation, there are two PUSCH transmission occasions for the PUSCH associated with different panels towards different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set.

According to a third aspect of embodiments of the present disclosure, a communication device is provided. The communication device has some or all of the functions of the terminal to implement the above method in the first aspect. For example, the functions of the communication device may have the functions of some or all of the embodiments of the present disclosure, or may have the functions to separately implement any one of the embodiments of the present disclosure. The functions may be realized in hardware, or in hardware executing corresponding software. The hardware or software includes one or more units or modules corresponding to the above functions.

In one implementation, the structure of the communication device may include a transceiver module and a processing module, in which the processing module is configured to support the communication device to perform the corresponding functions in the method, and the transceiver module is configured to support the communication between the communication device and other devices. The communication device may also include a storage module for coupling with the transceiver module and the processing module, which stores computer programs and data necessary for the communication device.

As an example, the processing module may be a processor, the transceiver module may be a transceiver or a communication interface, and the storage module may be a memory.

According to a fourth aspect of embodiments of the present disclosure, another communication device is provided. The communication device has some or all of the functions of the network device to implement the above method embodiments in the second aspect. For example, the functions of the communication device may have the functions of some or all of the embodiments of the present disclosure, or may have the functions to separately implement any one of the embodiments of the present disclosure. The functions may be realized in hardware, or in hardware executing corresponding software. The hardware or software includes one or more units or modules corresponding to the above functions.

In one implementation, the structure of the communication device may include a transceiver module and a processing module, in which the processing module is configured to support the communication device to perform the corresponding functions in the method, and the transceiver module is configured to support the communication between the communication device and other devices. The communication device may also include a storage module for coupling with the transceiver module and the processing module, which stores computer programs and data necessary for the communication device.

As an example, the processing module may be a processor, the transceiver module may be a transceiver or a communication interface, and the storage module may be a memory.

According to a fifth aspect of embodiments of the present disclosure, a communication device including a processor is provided. When the processor calls a computer program in a memory, the method in the first aspect above is implemented.

According to a sixth aspect of embodiments of the present disclosure, a communication device including a processor is provided. When the processor calls a computer program in a memory, the method in the second aspect above is implemented.

According to a seventh aspect of embodiments of the present disclosure, a communication device including a processor and a memory for storing a computer program is provided. When the computer program stored in the memory is executed by the processor , the communication device is caused to implement the above method in the first aspect.

According to an eighth aspect of embodiments of the present disclosure, a communication device including a processor and a memory for storing a computer program is provided. When the computer program stored in the memory is executed by the processor, the communication device is caused to implement the above method in the second aspect.

According to a ninth aspect of embodiments of the present disclosure, a communication device including a processor and an interface circuit is provided. The interface circuit is configured to receive code instructions and transmit the code instructions to the processor, and the processor is configured to run the code instructions, to enable the device to implement the above method in the first aspect.

According to a tenth aspect of embodiments of the present disclosure, a communication device including a processor and an interface circuit is provided. The interface circuit is configured to receive code instructions and transmit the code instructions to the processor, and the processor is configured to run the code instructions, to enable the device to implement the above method in the second aspect.

According to an eleventh aspect of embodiments of the present disclosure, a system for determining an uplink DMRS port is provided. The system includes the communication device in the third aspect and the communication device in the fourth aspect, or the system includes the communication device in the fifth aspect and the communication device in the sixth aspect, or the system includes the communication device in the seventh aspect and the communication device in the eighth aspect, or the system includes the communication device in the ninth aspect and the communication device in the tenth aspect.

According to a twelfth aspect of embodiments of the present disclosure, a computer-readable storage medium for storing instructions used by the terminal. When the instructions are executed, the terminal is caused to implement the above method in the first aspect.

According to a thirteenth aspect of embodiments of the present disclosure, a readable storage medium for storing instructions used by the network device. When the instructions are executed, the network device is caused to implement the above method in the second aspect.

According to a fourteenth aspect of the present disclosure, a computer program product including a computer program is provided. When the computer program is running on a computer, the computer is cause to implement the above method in the first aspect.

According to a fifteenth aspect of the present disclosure, a computer program product including a computer program is provided. When the computer program is running on a computer, the computer is cause to implement the above method in the second aspect.

According to a sixteenth aspect of the present disclosure, a chip system including at least one processor and at least one interface is provided. The chip system is configured to support the terminal to perform the functions in the first aspect, for example, determining or processing at least one of the data or the information in the above method. In one possible design, the chip system further includes a memory for saving computer programs and data necessary for the terminal. The chip system may include a chip, or a chip and other discrete devices.

According to a seventeenth aspect of the present disclosure, a chip system including at least one processor and at least one interface is provided. The chip system is configured to support the network device to perform the functions in the second aspect, for example, determining or processing at least one of the data or the information in the above method. In one possible design, the chip system further includes a memory for saving computer programs and data necessary for the network device. The chip system may include a chip, or a chip and other discrete devices.

According to an eighteenth aspect of the present disclosure, a computer program is provided. When the computer program is running on a computer, the computer is caused to implement the above method in the first aspect.

According to a ninth aspect of the present disclosure, a computer program is provided. When the computer program is running on a computer, the computer is caused to implement the above method in the second aspect.

### BRIEF DESCRIPTION OF THE DRAWINGS

In order to more clearly illustrate the technical solution in the embodiments of the present disclosure or in the background, a description of the accompanying drawings used in the embodiments of the present disclosure or in the background is given below.
FIG. 1 is a schematic diagram of a front-load demodulation reference signal (DMRS) pattern with a configuration type 1 and 1 symbol according to the embodiments of the present disclosure.
FIG. 2 is a schematic diagram of a front-load DMRS pattern with a configuration type 1 and 2 symbols according to the embodiments of the present disclosure.
FIG. 3 is a schematic diagram of a front-load DMRS pattern with a configuration type 2 and 1 symbol according to the embodiments of the present disclosure.
FIG. 4 is a schematic diagram of a front-load DMRS pattern with a configuration type 2 and 2 symbols according to the embodiments of the present disclosure.
FIG. 5 is a logical diagram for realizing multi-panel transmission based on single DCI according to the embodiments of the present disclosure.
FIG. 6 is schematic diagram of applying two codewords (CWs) in multi-layer data for scheduling and transmission according to the embodiments of the present disclosure.
FIG. 7 is a schematic diagram of an architecture of a communication system according to the embodiments of the present disclosure.
FIG. 8 is a flowchart of a method for determining an uplink DMRS port according to the embodiments of the present disclosure.
FIG. 9 is a flowchart of another method for determining an uplink DMRS port according to the embodiments of the present disclosure.
FIG. 10 is a flowchart of another method for determining an uplink DMRS port according to the embodiments of the present disclosure.
FIG. 11 is a flowchart of another method for determining an uplink DMRS port according to the embodiments of the present disclosure.
FIG. 12 is a block diagram of a communication apparatus according to the embodiments of the present disclosure.
FIG. 13 is a block diagram of another communication device according to the embodiments of the present disclosure.
FIG. 14 is a block diagram of a chip according to the embodiments of the present disclosure.

### DETAILED DESCRIPTION

The embodiments of the present disclosure are described in detail below. Examples of the embodiments are shown in the accompanying drawings, in which the same or similar labels throughout the disclosure represent the same or similar elements or elements having the same or similar functions. The embodiments below with reference to the accompanying drawings are exemplary and are intended to explain the present disclosure, but should not be construed as a limitation to the present disclosure. In the description of the present disclosure, unless otherwise specified, "/" means or, for example, A/B may mean A or B; "and/or" in this disclosure is only a description of the association relationship of associated objects, indicating that there may be three relationships, for example, A and/or B may mean: A, A and B, or B.

In order to improve coverage of a cell edge and provide a more balanced service quality in a service area, Coordinated Multiple Point transmission (CoMP) continues to be an important technology in a NR system. From the perspective of a network form, a network deployment is carried out by means of a large number of distributed access points and basebands for centralized processing, which is more conducive to providing a balanced user experience rate, and significantly reducing the delay and signaling overhead caused by a cell handover. With the increase of the frequency band, a relatively dense access point deployment is also required from the perspective of ensuring the network coverage. In a high frequency band, with the improvement of integration of active antenna devices, a modular active antenna array will be more inclined to be used. An antenna array at each transmission reception point (TRP) may be divided into several relatively independent antenna panels, so a shape of the entire array and a number of ports in the entire array may be flexibly adjusted according to deployment scenarios and service requirements. The antenna panels or TRPs may also be connected by optical fibers for a more flexible distributed deployment. In a millimeter wave band, as the wavelength decreases, the blocking effect caused by obstacles such as a human body or a vehicle will be more significant. In this case, from the perspective of ensuring the robustness of a link connection, the collaboration among multi-TRP or multi-panel may also be used to transmit/receive a plurality of beams from a plurality of angles, which reduces the adverse impact of the blocking effect.

According to a mapping relationship between transmitted signal streams to multi-TRPs/multi-panels, the CoMP technology may be divided into coherent transmission and non-coherent transmission. During the coherent transmission, each data layer is mapped to the multi-TRPs/multi-panel via a weighted vector. During the non-coherent transmission, each data stream is only mapped to a part of the multi-TRPs/multi-panel. The coherent transmission has higher requirements for synchronization between transmission points and a transmission capacity of a backhaul link, so it is more sensitive to many non-ideal factors in actual deployment conditions. Relatively speaking, the non-coherent transmission is less affected by the above factors, so it is a key consideration for the CoMP technology.

It needs to be noted that in the version Rel-15 of the NR system, the research and standardization work on multi-transmission reception point (MTRP) has not been fully carried out. The version Rel-16 focuses on standardization of a physical downlink shared channel (PDSCH). The version Rel-17 focuses on standardization and enhancement of the MTRP for a physical uplink shared channel (PUSCH)/ a physical uplink control channel (PUCCH), but only standardizes a transmission solution based on time division multiplexing (TDM). The current version Rel-18 considers enhancement of a simultaneous transmission based on the MTRP of a multi-panel terminal for the PUSCH/PUCCH.

The concept of demodulation reference signal (DMRS) is introduced below.

For a PDSCH/PUSCH channel, a data layer for data transmission corresponds to a DMRS port used by demodulation. The design of the DMRS for the data channels (PDSCH/PUSCH) in the NR system mainly includes the following aspects.
1. Front-load DMRS: within each scheduling time unit, the location where the DMRS first appeared should be as close to a starting point of scheduling as possible. The use of the front-load DMRS helps the receiving side to quickly estimate the channel and perform a reception detection, which plays an important role in reducing the delay and supporting the so-called self-contained structure. Depending on a total number of orthogonal DMRS ports, the front-load DMRS may occupy two consecutive OFDM symbols at most.
2. Additional DMRS: the front-load DMRS may obtain a channel estimation performance that meets demodulation requirements with lower overhead in low mobility scenarios. However, a mobile speed considered by the NR system may reach up to 500km/h. Faced with such a large dynamic range of mobility, in addition to the front-load DMRS, more DMRS symbols need to be inserted within a scheduling duration in medium/high speed scenarios, to meet an estimation accuracy of channel time variability. To address this problem, a DMRS structure that combines the front-load DMRS with the additional DMRS with configurable time domain density is adopted in the NR system. A pattern of each group of additional DMRSs is a repetition of a front-load DMRS pattern.

Within each scheduling time unit, if there is an additional DMRS, the pattern of each group of additional DMRSs is consistent with the front-load DMRS pattern. Therefore, a pattern design of the front-load DMRS is the basis of DMRS design. The design idea of the front-load DMRS is divided into two types, i.e., type 1 and type 2. The type 1 adopts a "COMB + orthogonal covering code (OCC)" structure, and the type 2 is based on a "frequency division multiplexing (FDM) + OCC" structure.

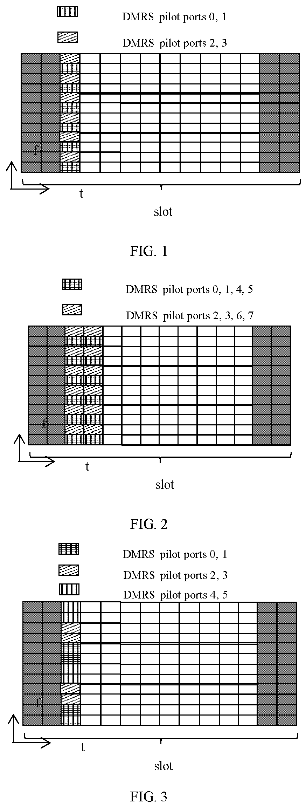

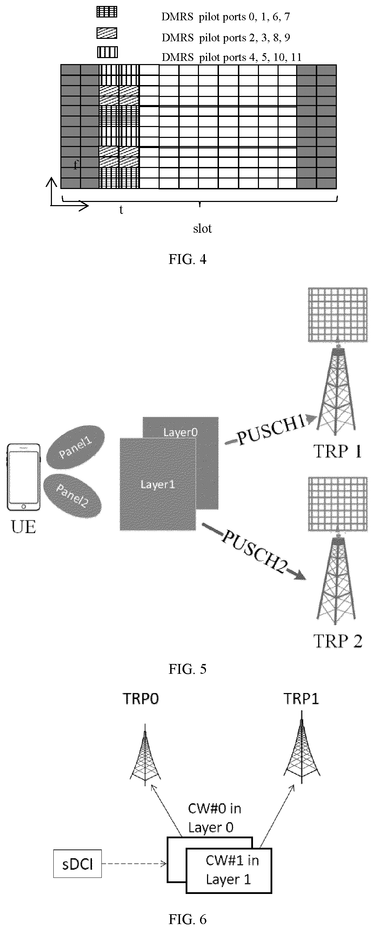

Depending on the number of orthogonal ports used for transmission, the front-load DMRS may be configured with two OFDM symbols at most. Considering the factor of power utilization efficiency, when a front-load DMRS with two symbols is used, on the basis of a cyclic shift (CS) or the OCC, a TD-OCC (i.e., time division orthogonal covering code) is used. FIG.s 1 to 4 are schematic diagrams of front-load DMRS patterns with two configuration types. FIG. 1 is a schematic diagram of a front-load DMRS pattern with the configuration type 1 and 1 symbol; FIG. 2 is a schematic diagram of a front-load DMRS pattern with the configuration type 1 and 2 symbols; FIG. 3 is a schematic diagram of a front-load DMRS pattern with the configuration type 2 and 1 symbols; and FIG. 4 is a schematic diagram of a front-load DMRS pattern with the configuration type 2 and 2 symbols.

In the medium/high speed scenarios, in addition to the front-load DMRS, it is necessary to insert more DMRS symbols within the scheduling duration to meet the estimation accuracy of channel time variability. The DMRS structure that combines the front-load DMRS with the additional DMRS with configurable time field density is adopted in the NR system. The pattern of each group of additional DMRSs is a repetition of the front-load DMRS pattern. Therefore, consistent with the front-load DMRS, each group of additional DMRSs may also occupy two consecutive DMRS symbols at most. Depending on specific usage scenarios, three groups of additional DMRSs may be configured for each scheduling at most. The number of the additional DMRSs depends on high-layer parameters and a specific scheduling duration.

The concept of quasi-colocation (QCL) is described below.

QCL refers to that large-scale parameters of the channel experienced by a symbol on a certain antenna port may be inferred from those of the channel experienced by a symbol on another antenna port. The large-scale parameters may include a delay spread, an average delay, a Doppler spread, a Doppler shift, an average gain, and a spatial RX parameter.

The concept of the QCL was introduced with the advent of the CoMP technology. A plurality of stations involved in the CoMP may correspond to a plurality of geographically different stations or a plurality of sectors with different antenna panel orientations. For example, when a terminal receives data from different stations, a spatial difference of each station will lead to a difference in large-scale channel parameters of RX links from different stations, such as a Doppler frequency offset and a delay spread. The large-scale parameters of the channel will directly affect adjustment and optimization of a filter coefficient during a channel estimation, and different channel estimation filter coefficients should be used for signals emitted by different stations to adapt to corresponding channel propagation characteristics.

Therefore, although the difference in the spatial position or the angle of each station is transparent to the UE (i.e., a terminal) and the CoMP operation, the effect of the above differences in the spatial position on the large-scale parameters of the channel is an important factor to be considered when the UE performs channel estimation and reception detection. The QCL of certain large-scale parameters of two antenna ports means that these large-scale parameters of the two ports are the same. In other words, as long as some large-scale parameters of the two ports are the same, regardless of whether their actual physical locations or corresponding antenna panel orientations are different for the two ports, the terminal may assume that the two ports are at the same location (that is, in an QCL relationship).

For some typical application scenarios, considering possible QCL relationships between various reference signals, from the perspective of simplifying signalings, NR divide large-scale parameters of several channels into the following 4 types, to facilitate the configuration/indication for the system according to different scenarios.
1) QCL-TypeA: {Doppler Shift, Doppler Spread, Average Delay, Delay Spread}; in which other large-scale parameters except for the spatial RX parameters are the same. For frequency bands below 6 GHz, spatial RX parameters may not be needed.
2) QCL-TypeB: {Doppler Shift, Doppler Spread};
3) QCL-TypeC: {Doppler Shift, Average Delay}; and
4) QCL-TypeD: {Spatial RX Parameter}; as mentioned above, since this parameter is mainly for the frequency band above 6GHz, it is set as a separate QCL type.

It may be understood that the standard of version Rel-17 describes that in the multi-TRP scenario, the uplink enhancement supports a repeated transmission mode for the PUSCH/PUCCH channel, where transmission of the uplink channels may be performed to different TRPs at the base station side in different uplink beam directions via the TDM mode.

At present, the bottleneck of the communication system is still present in the rate and coverage of uplink transmission. Therefore, for an enhancement direction of the system in the Rel-18 standard, it is mainly considered in multi-TRP scenarios that, uplink simultaneous transmission via multi-panel (STxMP) is used by the multi-panel terminal to improve the uplink rate and further improve the reliability of the transmission. The transmission may be scheduled based on one piece of DCI carried by one PDCCH channel, or may be scheduled separately based on different DCI carried by different PDCCHs. At present, the synchronous transmission solution under consideration is mainly that channel transmission with different panels is implemented based on space division multiplexing (SDM) or FDM. As shown in FIG. 5, which is a logical diagram for implementation of multi-panel transmission based on single DCI (S-DCI).

The multi-panel implementation of the terminal is generally that a plurality of physical panels are configured. The capabilities of different panels may be different from each other, for example, having different sounding reference signal (SRS) port numbers, a maximum number of data transmission layers supported is not necessarily the same, or the like. For example, a panel supports transmission of 2 layers at most, and another panel supports transmission of 4 layers at most. The network scheduler determines whether the terminal is currently suitable for uplink STxMP. If the terminal is currently suitable for the uplink STxMP and the simultaneous scheduling is performed, the network device will directly or indirectly indicate relevant transmission parameters, including specific beam indication information of the terminal, a number of data layers used for transmission, an allocation situation of DMRS ports used, and pre-coded indication information. Here, there is a need to mainly determine the DMRS port indication problem under S-DCI scheduling, that is, how to determine which DMRS ports are used by PUSCHs on different panels for transmission.

Currently, the protocol supports a maximum number of uplink transmission layers is equal to 4, corresponding to transmission of one codeword (CW). Therefore, another problem in the multi-panel enhancement is that, up to 2 CWs are supported in the uplink to realize a flexible mapping, data layers 1 to 4 correspond to transmission of one CW in the existing uplink or downlink layer mapping solution, it is difficult for a same modulation and coding scheme (MCS) to adapt to channel conditions of different layers, and thus a performance loss occurs when interlayer channel performances are quite different. Therefore, it is considered that two CWs are also applied to data at layers 2 to 4 for scheduling and transmission. As shown in FIG. 6, the network may thus fully perform scheduling according to the interlayer channel conditions. For example, for 3 layer transmission, two CWs may be used for scheduling when there is a large interlayer difference of the channel, in which one CW is used for data transmission of 1 layer, and the other CW is used for data transmission of 2 layers. This also facilitates data retransmission and scheduling, which is conducive to improving the system throughput. The most transmission in the system is transmission of 4 layers or less, so it is also good for the overall performance optimization.

However, in the uplink enhancement of Rel-18, it is necessary to consider how to support a higher throughput and a more reliable transmission performance by uplink simultaneous transmission via multi-panel/multi-TRP. In addition, in order to support the uplink STxMP based on the S-DCI, it is necessary to consider an enhancement solution of a flexible allocation indication of the DMRS port that may support a single-user multiple-input multiple-output (SU-MIMO) and a multi-user multiple-input multiple-output (MU-MIMO) in the SDM transmission multiplexing mode.

Therefore, the present disclosure provides a method and an apparatus for determining a DMRS port. In order to better understand the method for determining an uplink DMRS port in the embodiments of the present disclosure, the communication system in the embodiments of the present disclosure is first described below.

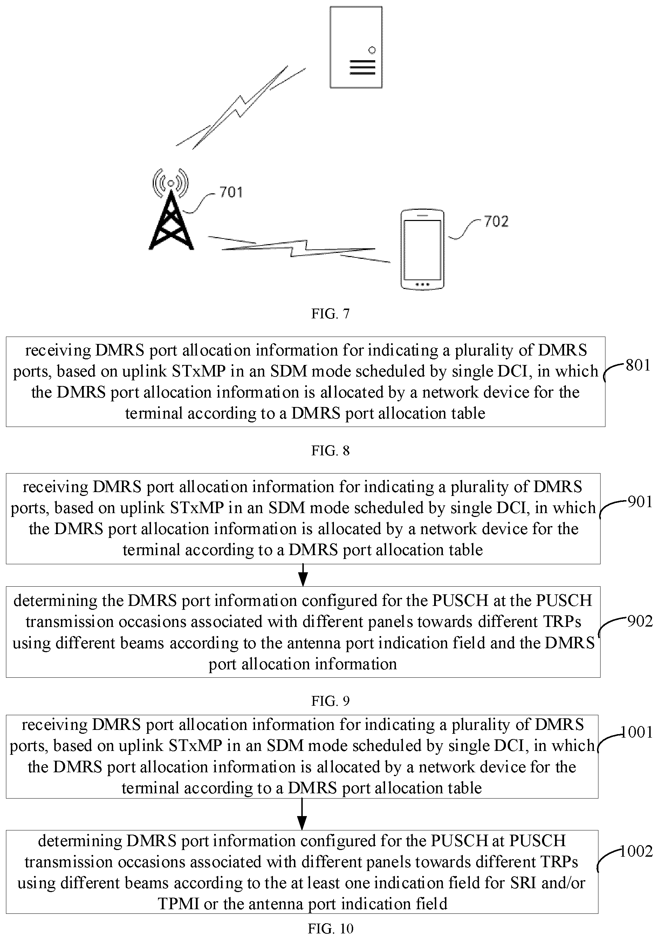

Please refer to FIG. 7, which is a schematic diagram of an architecture of a communication system according to the embodiments of the present disclosure. The communication system may include but is not limited to one network device and one terminal. The number and form of the device shown in FIG. 7 are as an example and do not constitute a limitation on the embodiments of the present disclosure, and may include two or more network devices and two or more terminals in practical application. The communication system shown in FIG. 7 includes one network device 701 and one terminal 702 as an example.

It needs to be noted that a technical solution of the embodiments of the present disclosure may be applied to various communication systems, such as, a long term evolution (LTE) system, a 5th generation (5G) mobile communication system, a 5G new radio (NR) system, or other new mobile communication systems in the future. It should also be noted that the sidelink in the embodiments of the present disclosure may also be referred to as a side link or a direct link.

The network device 701 in the embodiments of the present disclosure is an entity on the network side used for transmitting or receiving signals. For example, the network device 701 may be an evolved NodeB (eNB), a TRP, a next generation NodeB (gNB) in an NR system, a base station in other future mobile communication systems, or an access node in a wireless fidelity (WiFi) system in other mobile communication systems in the future. The specific technology and device form adopted by the network device are not limited in the embodiments of the present disclosure. The network device in the embodiments of the present disclosure may be composed of a central unit (CU) and a distributed unit (DU), in which the CU may also be called a control unit. A protocol layer of the network device, such as the base station, may be separated by employing a CU-DU structure, in which, some functions of the protocol layer are centrally controlled by the CU, while some or all of remaining functions of the protocol layer are distributed in the DU. The DU is controlled by the CU.

The terminal 702 in the embodiments of the present disclosure is an entity on a user side used for receiving or transmitting a signal, such as a mobile phone. The terminal may also be called a terminal device, a user equipment (UE), a mobile station (MS), a mobile terminal (MT), etc. The terminal may be a car with a communication function, a smart car, a mobile phone, a wearable device, a Pad, a computer with a wireless sending and receiving function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in a transportation safety, a wireless terminal in a smart city, a wireless terminal in a smart home and so on. The specific technology and device form adopted by the terminal are not limited in the embodiments of the present disclosure.

It may be understood that the communication system in the embodiments of the present disclosure is intended to illustrate the technical solution in the embodiments of the present disclosure more clearly, does not constitute a limitation of the technical solution in the embodiments of the present disclosure. Those skilled in the art may know that the technical solution in the embodiments of the present disclosure is equally applicable to similar technical problems, with the evolution of a system architecture and the emergence of a new service scene.

Further description is made to the method and the apparatus for determining an uplink DMRS port in the embodiments of the present disclosure in combination with the accompanying drawings and detailed implementations.

Please refer to FIG. 8, which is a flowchart of a method for determining an uplink DMRS port according to the embodiments of the present disclosure. It needs to be noted that the method for determining an uplink DMRS port in the embodiments of the present disclosure may be executed by a terminal with multiple panels. As shown in FIG. 8, the method may include, but is not limited to, the following step 801.

At step 801, DMRS port allocation information for indicating a plurality of DMRS ports is received based on uplink simultaneous transmission via multi-panel (STxMP) in an SDM mode scheduled by single downlink control information (DCI). The DMRS port allocation information is allocated by a network device for the terminal according to a DMRS port allocation table.

It needs to be noted that "one" or "single" in the embodiments of the present disclosure refers to including at least one, which is not limited to only one. Similarly, "two" means at least two, which is not limited to only two.

In the embodiments of the present disclosure, the DMRS port allocation information is configured to determine the DMRS port information corresponding to the PUSCH transmission occasions associated with different panels towards different TRPs using different beams (panel/TRP/TCI (transmission configuration indication) state). The DMRS port information corresponding to the PUSCH transmission occasions with different panels towards different TRPs using different beams may belong to the same CDM group or different CDM groups. That is, PUSCH transmissions are performed by different panels towards different TRPs, and different beams are used for these PUSCH transmissions. Each PUSCH may include one or more PUSCH transmission occasions. The network device may configure DMRS port information for each PUSCH transmission occasion. In other words, the PUSCH transmission occasions in a plurality of PUSCHs may be the same or different. The network device may configure corresponding DMRS port information for PUSCH transmission occasions in each PUSCH. In some embodiments, different PUSCHs correspond to the same PUSCH transmission occasion. In other embodiments, different PUSCHs correspond to different PUSCH transmission occasions.

Optionally, an indication of the beam includes an indication way based on a unified TCI architecture, also includes a way of using a spatial relation info indication when there is no unified TCI indication.

In the embodiments of the present disclosure, when the terminal receives the DMRS port allocation information allocated by the network device for the terminal, the DMRS port information configured for the PUSCH at the PUSCH transmission occasions associated with different panels towards different TRPs using different beams may be determined according to the DMRS port allocation information.

By implementing the embodiments of the present disclosure, the DMRS port allocation information for indicating the plurality of DMRS ports is allocated for the multi-panel based terminal, so as to inform the terminal of the DMRS port information corresponding to the PUSCH transmission occasions associated with different panels towards different TRPs using different beams, which may realize the enhancement of the flexible allocation indication of the DMRS port that may support the SU-MIMO and the MU-MIMO in the SDM transmission multiplexing mode, provide a solution of the uplink STxMP based on single DCI, and solve the problem of how to support a higher throughput and a more reliable transmission performance by the uplink simultaneous transmission with multiple panels or multiple TRPs in the uplink enhancement of the version Rel-18.

Optionally, in some embodiments of the present disclosure, an antenna port indication field in the DCI signaling may be used to indicate the total number of data layers (that is, the number of RANKs). In the embodiments of the present disclosure, the "antenna ports" indication field in the DCI signaling is used to indicate the total number of data layers, that is, the number of RANKs. RANK is only for an allocation situation of RANK>1 in the uplink DMRS port allocation table. The RANK combinations on different panels are determined by default or by a pre-defined method, and the DMRS port allocation in different beam directions may be determined separately. Please refer to FIG. 9, which is another flowchart of another method for determining an uplink DMRS port according to the embodiments of the present disclosure. It needs to be noted that the method for determining an uplink DMRS port in the embodiments of the present disclosure is executed by a terminal with multiple panels. As shown in FIG. 9, this method may include, but is not limited to, the following steps 901 and 902.

At step 901, DMRS port allocation information is received based on uplink STxMP in an SDM mode scheduled by single DCI. The DMRS port allocation information indicates a plurality of DMRS ports allocated by a network device for the terminal according to a DMRS port allocation table.

In the embodiments of the present disclosure, the DMRS port allocation information is used to determine the DMRS port information corresponding to the PUSCH transmission occasions associated with different panels towards different TRPs using different beams (panel/TRP/TCI state), in which the DMRS port information corresponding to the PUSCH transmission occasions associated with different panels towards different TRPs using different beams belongs to a same code division multiplexing (CDM) group or different CDM groups.

Optionally, the single DCI in the embodiments of the present disclosure may further include an antenna port indication field, and the antenna port indication field indicates a total number of transmission ranks (RANKs) for transmitting a PUSCH, and the total number of RANKs is greater than 1

At step 902, the DMRS port information configured for the PUSCH at the PUSCH transmission occasions associated with different panels towards different TRPs using different beams is determined according to the antenna port indication field and the DMRS port allocation information.

In the embodiments of the present disclosure, PUSCH transmissions are performed by different panels towards different TRPs, and different beams are used for these PUSCH transmission. Each PUSCH may include one or more PUSCH transmission occasions. The network device may configure DMRS port information for each PUSCH transmission occasion. In other words, the PUSCH transmission occasions in a plurality of PUSCHs may be the same or different. The network device may configure corresponding DMRS port information for the PUSCH transmission occasions in each PUSCH. In some embodiments, different PUSCHs correspond to the same PUSCH transmission occasion. In other embodiments, different PUSCHs correspond to different PUSCH transmission occasions.

In some embodiments of the present disclosure, there are two PUSCH transmission occasions for the PUSCH associated with different panels towards different TRPs using different beams, and the DMRS port allocation information includes at least a DMRS port set allocated for the terminal. In one possible implementation, a number of DMRS ports allocated to a first PUSCH transmission occasion and a number of DMRS ports allocated to a second PUSCH transmission occasion may be determined in sequence in a default manner according to the DMRS port set, in which the two PUSCH transmission occasions do not support a first RANK combination, and the total number of RANKs indicated by the antenna port indication field is 2 or 4. As an example, the first RANK combination in the embodiments of the present disclosure is a RANK combination of 1+3 or a RANK combination of 3+1.

For example, in the case that the RANK combination of 1+3 or the RANK combination of 3+1 is not supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), and 2+2 (total number of layers is 4). In the case that the total number of RANKs indicated by the antenna port indication field is 2 or 4, the number of DMRS ports allocated to the first PUSCH transmission occasion (such as panel#1) and the number of DMRS ports allocated to the second PUSCH transmission occasion (panel#2) may be determined in sequence in the default manner. Optionally, if the RANK combination of 1+3 or 3+1 is not supported, the RANK combinations actually supported by the PUSCH transmissions corresponding to the two panels/TRPs/TCIs are 1+1 (total number of layers is 2), 1+2 (total number of layers is 3), 2+1 (total number of layers is 3), 2+2 (total number of layers is 4), then when the total number of RANKs indicated by the antenna port indication field is 2 or 4, the number of DMRS ports allocated to panel#1 and the number of DMRS ports allocated to panel#2 are determined in sequence in the default manner. For example, if the ports indicated by the DCI signaling is specifically DMRS ports={2,3}, the DMRS port allocated to the first PUSCH transmission occasion (such as panel#1) is determined in the default manner as {2}, and the DMRS port allocated to the second PUSCH transmission occasion (panel#2) is determined in the default manner as {3}.

In some embodiments of the present disclosure, there are two PUSCH transmission occasions for the PUSCH associated with different panels to different TRPs using different beams, the DMRS port allocation information may include at least a DMRS port set allocated for the terminal, and index values of DMRS ports in the DMRS port set has a mapping relationship with RANK combinations supported by a plurality of PUSCH transmission occasions. In one possible implementation, a number of DMRS ports allocated to a first PUSCH transmission occasion and a number of DMRS ports allocated to a second PUSCH transmission occasion may be determined in a default pre-defined manner according to the DMRS port set and the mapping relationship, in which the two PUSCH transmission occasions do not support a first RANK combination, and the total number of RANKs indicated by the antenna port indication field is 3.

For example, in the case that the RANK combination of 1+3 or the RANK combination of 3+1 is not supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), and 2+2 (total number of layers is 4). In the case that the total number of RANKs indicated by the antenna port indication field is 3, the number of DMRS ports allocated to the first PUSCH transmission occasion and the number of DMRS ports allocated to the second PUSCH transmission occasion may be determined in sequence in the default manner. For example, in the DMRS port allocation table, the DMRS port configured in the case of "dmrs-Type=2, single symbol, and RANK=3" is shown in table 1 below. It may be pre-defined in a default manner that the RANK combination of 2+1 is indicated by index0-2 (that is, Value={0, 1, 2}), the RANK combination of 2+1 is indicated by index3-5 (that is, Value={3, 4, 5}), and the ports are allocated in sequence. For example, if Value is equal to 0 and the corresponding DMRS ports are {0,1,2}, then it is pre-defined in a default manner that the RANK combination of 1+2 is indicated by Value{0} and the ports are allocated in sequence. Therefore, it may be determined that the DMRS port for the first PUSCH transmission occasion (panel#1) is {0}, and the DMRS ports for the second PUSCH transmission occasion (panel#2) are {1, 2}. For another example, if Value is equal to 4 and the corresponding DMRS ports are {0,1,2}, then it is pre-defined in a default manner that the RANK combination of 2+1 is indicated by Value{4} and the ports are allocated in sequence. Therefore, it may be determined that the DMRS ports for the first PUSCH transmission occasion (panel#1) are {0,1}, and the DMRS port for the second PUSCH transmission occasion (panel#2) is {2}.

**Table 1 the DMRS port configured in the case of "dmrs-Type=2, single symbol, and RANK=3"**

| | Value | Number of DMRS CDM group(s) without data | | DMRS port(s) | |
|---|---|---|---|---|---|
| | 0 | | 2 | | 0-2 |
| | 1 | | 3 | | 0-2 |
| | 2 | | 3 | | 3-5 |
| | 3 | | 2 | | 0-2 |
| | 4 | | 3 | | 0-2 |
| | 5 | | 3 | | 3-5 |
| | 6-15 | | Reserved | | Reserved |

It may be understood that each element in the table 1 is independent, these elements are listed exemplarily in the same table, but it does not mean that all elements in the table must exist at the same time as shown in the table. The value of each element is independent of the values of any other elements in the table 1. Therefore, those skilled in the art may understand that the value of each element in the table 1 is an independent embodiment. It needs to be noted that the embodiments of the present disclosure include a plurality of tables, each of which is similar to the table 1 in that a plurality of independent embodiments are combined into the same table, and each element in the table should also be considered as an independent embodiment.

In some embodiments of the present disclosure, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions. There are two PUSCH transmission occasions for the PUSCH associated with different panels towards different TRPs using different beams.

In the embodiments of the present disclosure, the possible implementation of determining the DMRS port information configured for the PUSCH at the PUSCH transmission occasions associated with different panels towards different TRPs using different beams according to the antenna port indication field and the DMRS port allocation information may be as follows: determining a number of DMRS ports allocated to a first PUSCH transmission occasion and a number of DMRS ports allocated to a second PUSCH transmission occasion according to the DMRS port set and the mapping relationship, when the plurality of DMRS ports are allocated in sequence to the first and second PUSCH transmission occasions, in which the two PUSCH transmission occasions do not support a first RANK combination, and the total number of RANKs indicated by the antenna port indication field is 3.

For example, in the case that the RANK combination of 1+3 or the RANK combination of 3+1 is not supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), and 2+2 (total number of layers is 4). In the case that the total number of RANKs indicated by the antenna port indication field is 3, a column of information with the same number of rows may be added to the DMRS port allocation table. Optionally, it may be defined that the column of information indicates and distinguishes whether the RANK combination is 1+2 or 2+1, and the DMRS ports corresponds to different panels in sequence. For example, as shown in table 2 below, a column of additional indication information is added to the DMRS port allocation table to indicate and distinguish whether the RANK combination is 1+2 or 2+1. In the DMRS port allocation table, it may be determined according to the corresponding additional indication information that, the RANK combination of 1+2 is indicated by index0-2 (that is, Value={0,1,2}) and the RANK combination of 2+1 is indicated by index3-5 (that is, Value={3,4,5}). For example, if the Value is equal to 0, the corresponding DMRS ports are {0,1,2}, the Value {0} correspondingly indicates the RANK combination of 1+2, and the DMRS ports corresponds to different panels in sequence. Therefore, it may be determined that the DMRS port for the first PUSCH transmission occasion (for example, panel#1) is {0}, and the DMRS ports for the second PUSCH transmission occasion (panel#2) are {1,2}. For another example, if the Value is equal to 5, the corresponding DMRS ports are {3,4,5}, the Value {5} correspondingly indicates the RANK combination of 2+1, and the DMRS ports corresponds to different panels in sequence. Therefore, it may be determined that the DMRS ports for the first PUSCH transmission occasion (panel#1) are {3,4}, and the DMRS port for the second PUSCH transmission occasion (panel#2) is {5}.

**Table 2 the DMRS port configured in the case of "dmrs-Type=2, single symbol, and RANK=3"**

| Value | | Number of DMRS CDM group(s) without data | | DMRS port(s) | | Additional Indication | |
|---|---|---|---|---|---|---|---|
| | 0 | | 2 | | 0-2 | | 1+2 |
| | 1 | | 3 | | 0-2 | | 1+2 |
| | 2 | | 3 | | 3-5 | | 1+2 |
| | 3 | | 2 | | 0-2 | | 2+1 |
| | 4 | | 3 | | 0-2 | | 2+1 |
| | 5 | | 3 | | 3-5 | | 2+1 |
| | 6-15 | | Reserved | | Reserved | | |

In some embodiments of the present disclosure, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

In the embodiments of the present disclosure, there are two PUSCH transmission occasions for the PUSCH associated with different panels towards different TRPs using different beams, in which the possible implementation of determining the DMRS port information configured for the PUSCH at the PUSCH transmission occasions associated with different panels towards different TRPs using different beams according to the antenna port indication field and the DMRS port allocation information may be as follows: determining DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which two PUSCH transmission occasions do not support a first RANK combination, and the total number of RANKs indicated by the antenna port indication field is 3.

For example, in the case that the RANK combination of 1+3 or the RANK combination of 3+1 is not supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), and 2+2 (total number of layers is 4). In the case that the total number of RANKs indicated by the antenna port indication field is 3, a column of information with the same number of rows may be added to the DMRS port allocation table. Optionally, it may be defined that the column of the information indicates a DMRS port for the first PUSCH transmission occasion (such as panel#1). It may be understood that this method is more flexible, and a number of bits of corresponding DCI in the added DMRS port allocation table remains unchanged, and the overhead is not increased.

For example, as shown in the Table 3 below, a column of additional indication information is added to the DMRS port allocation table to indicate the DMRS port for the first PUSCH transmission occasion (such as panel#1). It is defined that the RANK combination of 1+2 is indicated by index0-5 (that is, Value={0,1,2,3,4,5}) and the RANK combination of 2+1 is indicated by index6-11 (that is, Value={6,7,8,9,10,11}). For example, if the Value is equal to 5, the corresponding DMRS ports are {3,4,5}, the Value {5} correspondingly indicates the RANK combination of 1+2, and the additional indication information indicates the DMRS port for the first PUSCH transmission occasion (for example, panel#1) is {4}, it may be determined that the DMRS port for the first PUSCH transmission occasion (for example, panel#1) is {4}, and the DMRS ports for the second PUSCH transmission occasion (panel#2) are {3,5}. For another example, if the Value is equal to 6, the corresponding DMRS ports are {0,1,2}, the Value {6} correspondingly indicates the RANK combination of 2+1, and the additional indication information indicates the DMRS ports for the first PUSCH transmission occasion (for example, panel#1) are {0,1}, it may be determined that the DMRS ports for the first PUSCH transmission occasion (for example, panel#1) are {0,1}, and the DMRS port for the second PUSCH transmission occasion (panel#2) is {2}.

**Table 2 the DMRS port configured in the case of "dmrs-Type=2, single symbol, and RANK=3"**

| Value | | Number of DMRS CDM group(s) without data | | DMRS port(s) | | Additional Indication TCI#1 | |
|---|---|---|---|---|---|---|---|
| | 0 | | 2 | | 0-2 | | 0 |
| | 1 | | 3 | | 0-2 | | 0 |
| | 2 | | 3 | | 3-5 | | 3 |
| | 3 | | 2 | | 0-2 | | 1 |
| | 4 | | 3 | | 0-2 | | 1 |
| | 5 | | 3 | | 3-5 | | 4 |
| | 6 | | 2 | | 0-2 | | 0,1 |
| | 7 | | 3 | | 0-2 | | 0,1 |
| | 8 | | 3 | | 3-5 | | 3,4 |
| | 9 | | 2 | | 0-2 | | 0,2 |
| | 10 | | 3 | | 0-2 | | 0,2 |
| | 11 | | 3 | | 3-5 | | 3,5 |
| | 11-15 | | Reserved | | Reserved | | |

Optionally, if the RANK combination of 1+3 or 3+1 is not supported, the RANK combinations actually supported by the PUSCH transmissions corresponding to the two panels/TRPs/TCIs are 1+1 (total number of layers is 2), 1+2 (total number of layers is 3), 2+1 (total number of layers is 3), and 2+2 (total number of layers is 4), then for the DMRS port allocation corresponding to RANK3, the same number of rows is needed to add in the DMRS port allocation table, and the following solution is adopted: adding the indicated information definition (such as adding a column) in a default way. As an example, the added column of information may be used to indicate and distinguish whether the RANK combination is 1+2 or 2+1, and different panels correspond to DMRS ports in sequence. As another example, the added column of information may be used to directly indicate the DMRS port for panel#1 (more flexible). The number of bits of corresponding DCI in the added DMRS table remains unchanged, and the overhead is not increased.

In some embodiments of the present disclosure, there may be two PUSCH transmission occasions for the PUSCH associated with different panels towards different TRPs using different beams, and the DMRS port allocation information includes at least a DMRS port set allocated for the terminal. In the embodiments of the present disclosure, the possible implementation of determining the DMRS port information configured for the PUSCH at the PUSCH transmission occasions associated with different panels towards different TRPs using different beams according to the antenna port indication field and the DMRS port allocation information may be as follows: determining a number of DMRS ports allocated to a first PUSCH transmission occasion and a number of DMRS ports allocated to a second PUSCH transmission occasion in sequence in a default manner according to the DMRS port set, in which the two PUSCH transmission occasions support a first RANK combination, and the total number of RANKs indicated by the antenna port indication field is 2.

For example, in the case that the RANK combination of 1+3 or the RANK combination of 3+1 (e.g., a flexible allocation mapping for 1 CW and 2 CWs) is supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), 2+2 (total number of layers is 4), 1+3 (total number of layers is 4), and 3+1 (total number of layers is 4). In the case that the total number of RANKs indicated by the antenna port indication field is 2, the number of DMRS ports allocated to the first PUSCH transmission occasion (such as panel#1) and the number of DMRS ports allocated to the second PUSCH transmission occasion (panel#2) may be determined in sequence in a default manner. For example, if the ports indicated by the DCI signaling are specifically DMRS={2,3}, it is determined that the DMRS port allocated to the first PUSCH transmission occasion (such as panel#1) is {2}, and the DMRS port allocated to the second PUSCH transmission occasion (panel#2) is {3}.

In some embodiments of the present disclosure, there may be two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions. In the embodiments of the present disclosure, the possible implementation of determining the DMRS port information configured for the PUSCH at the PUSCH transmission occasions associated with different panels towards different TRPs using different beams according to the antenna port indication field and the DMRS port allocation information may be as follows: determining a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions support a first RANK combination, and the total number of RANKs indicated by the antenna port indication field is 3 or 4.

For example, in the case that the RANK combination of 1+3 or the RANK combination of 3+1 (e.g., a flexible allocation mapping for 1 CW and 2 CWs) is supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), 2+2 (total number of layers is 4), 1+3 (total number of layers is 4), and 3+1 (total number of layers is 4). In the case that the total number of RANKs indicated by the antenna port indication field is 3 or 4, the number of DMRS ports allocated to the first PUSCH transmission occasion and the number of DMRS ports allocated to the second PUSCH transmission occasion may be determined in sequence in a default manner. For example, the DMRS port allocation table with dmrs-Type=2, single symbol, and RANK=3 is taken as an example. It may be predefined by default that the RANK combination of 2+1 is indicated by index0-2 (that is, Value={0, 1, 2}), the RANK combination of 2+1 is indicated by index3-5 (that is, Value={3, 4, 5}), and the ports are allocated in sequence. For another example, the DMRS port allocation table with dmrs-Type=2, single symbol, and RANK=4 is taken as an example. It may be predefined by default that the RANK combination of 2+2 is indicated by index0-2 (that is, Value={0, 1}), the RANK combination of 1+3 is indicated by index2 (that is, Value={2}), the RANK combination of 2+1 is indicated by index3-5 (that is, Value={3, 4, 5}), and the ports are allocated in sequence.

In some embodiments of the present disclosure, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions. As an example, there are two PUSCH transmission occasions for the PUSCH associated with different panels to different TRPs using different beams. In the embodiments of the present disclosure, the possible implementation of determining the DMRS port information configured for the PUSCH at the PUSCH transmission occasions associated with different panels towards different TRPs using different beams according to the antenna port indication field and the DMRS port allocation information may be as follows: determining a number of DMRS ports allocated to a first PUSCH transmission occasion and a number of DMRS ports allocated to a second PUSCH transmission occasion in sequence according to the DMRS port set and the mapping relationship, when the plurality of DMRS ports are allocated in sequence to the first and second PUSCH transmission occasions, in which the two PUSCH transmission occasions support a first RANK combination, and the total number of RANKs indicated by the antenna port indication field is 3 or 4.

For example, in the case that the RANK combination of 1+3 or the RANK combination of 3+1 (e.g., a flexible allocation mapping for 1 CW and 2 CWs) is supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), 2+2 (total number of layers is 4), 1+3 (total number of layers is 4), and 3+1 (total number of layers is 4). In the case that the total number of RANKs indicated by the antenna port indication field is 3 or 4, a column of information with the same number of rows may be added to the DMRS port allocation table. Optionally, it may be defined that the column of information indicates and distinguishes whether the RANK3 combination is 1+2 or 2+1, and whether the RANK4 combination is 2+2, 1+3, or 3+1. The DMRS ports correspond to different panels in sequence.

In some embodiments of the present disclosure, the DMRS port allocation information may include at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set. As an example, there are two PUSCH transmission occasions for the PUSCH associated with different panels to different TRPs using different beams. In the embodiments of the present disclosure, the possible implementation of determining the DMRS port information configured for the PUSCH at the PUSCH transmission occasions associated with different panels towards different TRPs using different beams according to the antenna port indication field and the DMRS port allocation information may be as follows: determining DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which the two PUSCH transmission occasions support a first RANK combination, and the total number of RANKs indicated by the antenna port indication field is 3 or 4.

For example, in the case that the RANK combination of 1+3 or the RANK combination of 3+1 (e.g., a flexible allocation mapping for 1 CW and 2 CWs) is supported, the RANK combinations actually supported by the PUSCH transmissions corresponding to the two panels/TRPs/TCI states may be 1+1 (total number of layers is 2), 1+2 (total number of layers is 3), 2+1 (total number of layers is 3), 2+2 (total number of layers is 4), 1+3 (total number of layers is 4), and 3+1 (total number of layers is 4). In the case that the total number of RANKs indicated by the antenna port indication field is 3 or 4, a column of information with the same number of rows may be added to the DMRS port allocation table. Optionally, it may be defined that the column of information indicates the DMRS port for the first PUSCH transmission occasion (such as panel#1). It may be understood that this method is more flexible, and the number of bits of corresponding DCI in the DMRS port allocation table remains unchanged, and the overhead is not increased.

Optionally, in the embodiments of the present disclosure, in the case that the RANK combination of 1+3 or the RANK combination of 3+1 (e.g., a flexible allocation mapping for 1 CW and 2 CWs) is supported, the RANK combinations actually supported may be 1+1, 1+2, 2+1, 2+2, 1+3, and 3+1. It may be indicated by default that, the DMRS port number for panel#1 and the DMRS port number for panel#2 are allocated for RANK2 in sequence, that is, if DMRS={2,3}, the DMRS port for panel#1 is {2}, and the DMRS port for panel#2 is {3} by default. Optionally, in the case that the RANK combination of 1+3 or the RANK combination of 3+1 (e.g., a flexible allocation mapping for 1 CW and 2 CWs) is supported, the RANK combinations actually supported may be 1+1, 1+2, 2+1, 2+2, 1+3, and 3+1, then different rows needs to be added to the table for the DMRS port allocation corresponding to RANK3 and the DMRS port allocation corresponding to RANK4, and the definition (adding a column of information) is added by default. The added column of information may be used to indicate whether the RANK3 combination is 1+2 or 2+1, or whether the combination of RANK4 is 2+2, 1+3 or 3+1, or whether the added column of information may be used to directly indicate the DMRS port for panel#1 (more flexible). The number of bits of corresponding DCI in the increased DMRS table remains unchanged, which does not increase the overhead.

Optionally, in the present disclosure, for the PUSCH transmission in the uplink simultaneous transmission, a SRI/TPMI field and an antenna port indication field are used jointly to analyze a specific allocation situation of the RANK combination. For the pre-coded indication methods of different panels, in codebook-based PUSCH transmission, the RANK combination may be obtained via one or two TPMI indication fields in the DCI, and in non-codebook based PUSCH transmission (i.e., PUSCH transmission is not based on a codebook), the RANK combination may be obtained via one or two SRI fields in the DCI. At the same time, the DMRS port information on different panels may be obtained by combining the port information indicated by the DMRS indication field for the antenna port. Please refer to FIG. 10, which is a flowchart of another method for determining a DMRS port according to the embodiments of the present disclosure. It needs to be noted that the method for determining an uplink DMRS port in the embodiments of the present disclosure is executed by a terminal with multiple panels. As shown in FIG. 10, this method may include, but is not limited to, the following steps 1001 and 1002.

At step 1001, DMRS port allocation information is received based on uplink STxMP in an SDM mode scheduled by single DCI. The DMRS port allocation information indicates a plurality of DMRS ports allocated by a network device for the terminal according to a DMRS port allocation table.

In the embodiments of the present disclosure, the DMRS port allocation information is used to determine the DMRS port information corresponding to the PUSCH transmission occasions associated with different panels towards different TRPs using different beams (panel/TRP/TCI state), in which the DMRS port information corresponding to the PUSCH transmission occasions associated with different panels towards different TRPs using different beams belongs to a same CDM group or different CDM groups.

In the embodiments of the present disclosure, PUSCH transmissions are performed by different panels towards different TRPs, and different beams are used for these PUSCH transmissions. Each PUSCH may include one or more PUSCH transmission occasions. The network device may configure DMRS port information for each PUSCH transmission occasion. In other words, the PUSCH transmission occasions in a plurality of PUSCHs may be the same or different. The network device may configure corresponding DMRS port information for the PUSCH transmission occasions in each PUSCH. In some embodiments, different PUSCHs correspond to the same PUSCH transmission occasion. In other embodiments, different PUSCHs correspond to different PUSCH transmission occasions.

Optionally, in the embodiments of the present disclosure, the single DCI further includes at least one indication field for SRS resource indicator (SRI) and/or transmitted precoding matrix indicator (TPMI), or an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal. It may be understood that in the codebook-based transmission, it is necessary to use the SRI and TPMI fields to jointly indicate the RANK combination, and in the non-codebook based transmission, the SRI field is used to indicate the RANK combination.

At step 1002, DMRS port information configured for the PUSCH at PUSCH transmission occasions associated with different panels towards different TRPs using different beams is determined according to the at least one indication field for SRI and/or TPMI and the antenna port indication field.

In the embodiments of the present disclosure, there may be two PUSCH transmission occasions for the PUSCH associated with different panels to different TRPs using different beams, and the at least one indication field for SRI and/or TPMI may include two indication fields for SRI and/or TPMI, in which a first indication field for SRI and/or TPMI indicates a number of RANKs corresponding to a first PUSCH transmission occasion; and a second indication field for SRI and/or TPMI indicates a number of RANKs corresponding to a second PUSCH transmission occasion.

In the embodiments of the present disclosure, the possible implementation of determining DMRS port information configured for the PUSCH at PUSCH transmission occasions associated with different panels towards different TRPs using different beams according to the at least one indication field for SRI and/or TPMI and the antenna port indication field may be as follows: determining RANK combinations supported by the two PUSCH transmission occasions according to the number of RANKs corresponding to the first PUSCH transmission occasion indicated by the first indication field for SRI and/or TPMI and the number of RANKs corresponding to the second PUSCH transmission occasion indicated by the second indication field for SRI and/or TPMI; and determining DMRS port information allocated to the first PUSCH transmission occasion and DMRS port information allocated to the second PUSCH transmission occasion according to the RANK combinations supported by the two PUSCH transmission occasions and the DMRS port set allocated for the terminal indicated by the antenna port indication field.

For example, if there are two SRIs and/or two TPMIs, the first SRI and/or the first TPMI may indicate the number of the RANK corresponding to the first PUSCH transmission occasion (such as Panel#1/TCI1/TRP1), and the second SRI and/or the second TPMI may indicate the number of the RANK corresponding to the second PUSCH transmission occasion (such as Panel#2/TCI2/TRP2). In this way, the numbers of the RANKs indicated by the two indication fields for SRI and/or TPMI, combined with the DMRS port set allocated for the terminal indicated by the antenna port indication field, may be used to determine the DMRS port information allocated to the first PUSCH transmission occasion and the DMRS port information allocated to the second PUSCH transmission occasion.

In some embodiments of the present disclosure, there may be two PUSCH transmission occasions for the PUSCH associated with different panels to different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

In the embodiments of the present disclosure, the possible implementation of determining DMRS port information configured for the PUSCH at PUSCH transmission occasions associated with different panels towards different TRPs using different beams according to the at least one indication field for SRI and/or TPMI and the antenna port indication field may be as follows: determining DMRS port information allocated to the first PUSCH transmission occasion and DMRS port information allocated to the second PUSCH transmission occasion in a pre-defined manner according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field.

For example, if there is only one indication field for SRI and/or TPMI, one SRI codepoint and/or one TPMI codepoint indicates two valid SRIs and/or two valid TPMIs. Taking the non-codebook based transmission as an example, the one SRI codepoint may be used to indicate two valid SRIs, in which the first valid SRI may be used to indicate the number of RANKs corresponding to the first PUSCH transmission occasion, and the second valid SRI may be used to indicate the number of RANKs corresponding to the second PUSCH transmission occasion. Taking the codebook-based transmission as another example, the one SRI codepoint and one TPMI codepoint may be used jointly to indicate the RANK combination. The one SRI codepoint and the one TPMI codepoint indicate two valid SRIs and TPMIs, in which the first valid SRI and the first valid TPMI jointly indicate the number of RANKs corresponding to the first PUSCH transmission occasion, and the second valid SRI and the second valid TPMI jointly indicate the number of RANKs corresponding to the second PUSCH transmission occasion. After determining the number of RANKs corresponding to the first PUSCH transmission occasion indicated by the first valid SRI and/or the first valid TPMI, and the number of RANKs corresponding to the second PUSCH transmission occasion indicated by the second valid SRI and/or the second valid TPMI, the DMRS ports may be allocated in a default pre-defined manner starting from a smaller PUSCH transmission occasion number (e.g., panel#1) according the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field. In this way, DMRS allocation situations on different panels may be obtained.

In one possible implementation, the DMRS port allocation information includes at least: additional indication information, in which the additional indication information indicates a DMRS port occupied by a first PUSCH transmission occasion, and the DMRS port occupied by the first PUSCH transmission occasion belongs to the DMRS port set. In the embodiments of the present disclosure, the possible implementation of determining DMRS port information configured for the PUSCH at PUSCH transmission occasions associated with different panels towards different TRPs using different beams according to the at least one indication field for SRI and/or TPMI and the antenna port indication field may be as follows: determining DMRS port information allocated to the first PUSCH transmission occasion and DMRS port information allocated to the second PUSCH transmission occasion according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, the DMRS port set allocated for the terminal indicated by the antenna port indication field, and the DMRS port occupied by the first PUSCH transmission occasion indicated by the additional indication information.

The column of information with the same number of rows may be added to the DMRS port allocation table. Optionally, it may be defined that the column of information indicates the DMRS port for the first PUSCH transmission occasion (such as panel#1/TCI1/TRP1). It may be understood that this method is more flexible, and the number of bits of corresponding DCI in the DMRS port allocation table remains unchanged, which does not increase the overhead.

In the embodiments of the present disclosure, for the PUSCH transmission in the uplink simultaneous transmission, the field for SRI/TPMI and the antenna port field are used jointly to analyze a specific allocation situation of the RANK combination. For the pre-coded indication methods of different panels, in codebook-based PUSCH transmission, the RANK combination may be obtained via one or two TPMI indication fields in the DCI, and in the non-codebook based PUSCH transmission, the RANK combination may be obtained via one or two SRI fields in the DCI. At the same time, the DMRS port information on different panels may be obtained by combining the port information indicated by the DMRS indication field for the antenna port according to the following implementations.

Implementation 1: if there are two indication fields for TPMI/SRI, the first field for SRI/TPMI indicates the number of RANKs corresponding to Panel#1/TCI1/TRP1, and the second field for SRI/TPMI indicates the number of RANKs corresponding to Panel#2/TCI2/TRP2.

Implementation 2: if there is only one indication field for TPMI/SRI, one SRI codepoint/TPMI codepoint corresponds to two valid TPMIs/SRIs. Optionally, a pre-defined rule may be added. For example, DMRS ports may be allocated from a smaller one such as panel#1 in a default pre-defined manner, and DMRS allocation situations on different panels may be obtained. A pre-defined rule may be added, such as adding a definition of the indicated information (for example, adding a column in the DMRS port allocation table) in a default way. The added column of information may be used to a) directly indicate the DMRS port for panel#1/TCI1/TRP1 (more flexible). The number of bits of corresponding DCI in the added DMRS table remains unchanged, and the overhead is not increased.

Optionally, for the uplink DMRS port allocation, DMRS port allocations for different TRPs may be within the same CDM group or from different CDM groups. At the same time, the RANK combinations supported by different CWs are also different. The disclosure may realize indication of different DMRS ports corresponding to the multi-panel transmission based on the S-DCI without increasing the overhead in the existing protocol.

By implementing the embodiments of the present disclosure, the DMRS port allocation information for indicating the plurality of DMRS ports is allocated for the multi-panel based terminal, so that the terminal may determine the DMRS port information corresponding to the PUSCH transmission occasions associated with different panels towards different TRPs using different beams, which may realize the enhancement of the flexible allocation indication of the DMRS port that may support the SU-MIMO and the MU-MIMO in the SDM transmission multiplexing mode, provide a solution of the uplink STxMP based on single DCI, and solve the problem of how to support a higher throughput and a more reliable transmission performance by the uplink simultaneous transmission with multiple panels or multiple TRPs in the uplink enhancement of the version Rel-18.

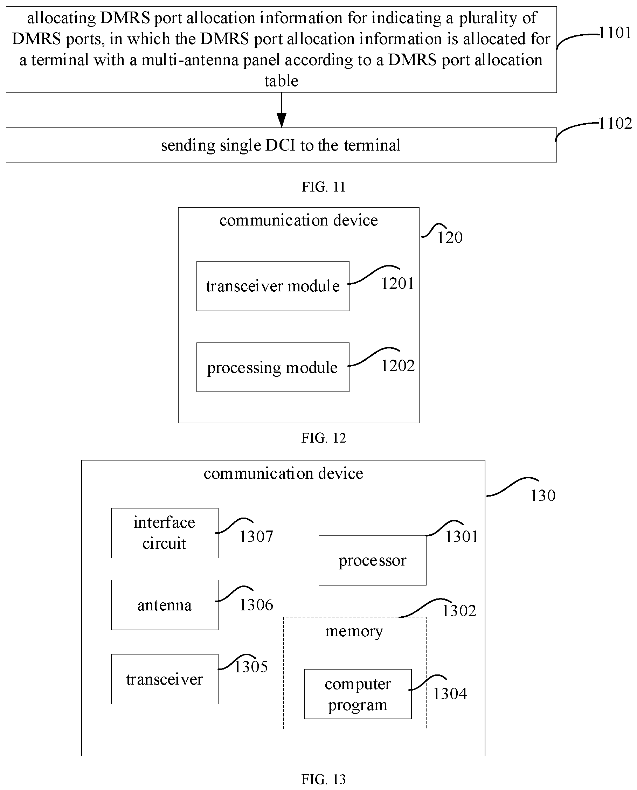

It may be understood that the above embodiments are implementations of the method for determining an uplink DMRS port in the embodiments of the present disclosure, which are described from the terminal side. The embodiments of the present disclosure also provide a method for determining an uplink DMRS port, the implementation of which is described from the network device below. It needs to be noted that an interpretation of a same parameter in the embodiments on the terminal corresponds to that in the embodiments on the network device side, which is not repeated here. Please refer to FIG. 11, which is a flowchart of another method for determining an uplink DMRS port according to the embodiments of the present disclosure. It needs to be noted that the method for determining an uplink DMRS port in the embodiments of the present disclosure may be executed by the network device. As shown in FIG. 11, the method may include but is not limited to the following steps 1101 and 1102.

At step 1101, DMRS port allocation information for indicating a plurality of DMRS ports is allocated for a terminal with multiple panels according to a DMRS port allocation table.

At step 1102, single DCI is sent to the terminal, in which the single DCI includes the DMRS port allocation information, and the DMRS port allocation information is configured to determine DMRS port information corresponding to PUSCH transmission occasions associated with different panels towards different TRPs using different beams, in which the DMRS port information corresponding to the PUSCH transmission occasions associated with different panels towards different TRPs using different beams belongs to a same CDM group or different CDM groups.

In the embodiments of the present disclosure, PUSCH transmissions are performed by different panels towards different TRPs, and different beams are used for these PUSCH transmissions. Each PUSCH may include one or more PUSCH transmission occasions. The network device may configure DMRS port information for each PUSCH transmission occasion. In other words, the PUSCH transmission occasions in a plurality of PUSCHs may be the same or different. The network device may configure corresponding DMRS port information for the PUSCH transmission occasions in each PUSCH. In some embodiments, different PUSCHs correspond to the same PUSCH transmission occasion. In other embodiments, different PUSCHs correspond to different PUSCH transmission occasions.

In some embodiments of the present disclosure, the single DCI further includes an antenna port indication field, and the antenna port indication field indicates a total number of transmission RANKs for transmitting a PUSCH, and the total number of RANKs is greater than 1. In the embodiments of the disclosure, the terminal may determine DMRS port information configured for the PUSCH at the PUSCH transmission occasions associated with different panels towards different TRPs using different beams according to the antenna port indication field and the DMRS port allocation information. The steps may be realized by any one implementation in each embodiment of the present disclosure respectively, which are not limited in the embodiments of the present disclosure and are not repeated herein.

In some embodiments of the present disclosure, there are two PUSCH transmission occasions for the PUSCH associated with different panels towards different TRPs using different beams, and the DMRS port allocation information includes at least a DMRS port set allocated for the terminal. In the embodiments of the present disclosure, the terminal may determine a number of DMRS ports allocated to a first PUSCH transmission occasion and a number of DMRS ports allocated to a second PUSCH transmission occasion in sequence in a default manner according to the DMRS port set, in which the two PUSCH transmission occasions do not support a first RANK combination, and the total number of RANKs indicated by the antenna port indication field is 2 or 4.

In the embodiments of the present disclosure, the "antenna ports" indication field in the DCI signaling is used to indicate the total number of data layers, that is, the number of RANKs.

In some embodiments of the present disclosure, there are two PUSCH transmission occasions for the PUSCH associated with different panels to different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions. In one possible implementation, the terminal may determine a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions do not support a first RANK combination, and the total number of RANKs indicated by the antenna port indication field is 3.

In some embodiments of the present disclosure, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions. In the embodiments of the present disclosure, the terminal may determine a number of DMRS ports allocated to a first PUSCH transmission occasion and a number of DMRS ports allocated to a second PUSCH transmission occasion in sequence according to the DMRS port set and the mapping relationship, when the plurality of DMRS ports are allocated in sequence to the first and second PUSCH transmission occasions, in which the two PUSCH transmission occasions do not support a first RANK combination, and the total number of RANKs indicated by the antenna port indication field is 3.

In some embodiments of the present disclosure, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set. In the embodiments of the present disclosure, there are two PUSCH transmission occasions for the PUSCH associated with different panels towards different TRPs using different beams, and the terminal may determine DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which two PUSCH transmission occasions do not support a first RANK combination, and the total number of RANKs indicated by the antenna port indication field is 3.

In some embodiments of the present disclosure, the single DCI further includes at least one indication field for SRI and/or TPMI, and an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one implementation, there are two PUSCH transmission occasions for the PUSCH associated with different panels to different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second indication field for SRI and/or TPMI indicates a number of RANKs corresponding to a second PUSCH transmission occasion. In the embodiments of the present disclosure, the terminal may determine RANK combinations supported by the two PUSCH transmission occasions according to the number of RANKs corresponding to the first PUSCH transmission occasion indicated by the first indication field for SRI and/or TPMI and the number of RANKs corresponding to the second PUSCH transmission occasion indicated by the second indication field for SRI and/or TPMI; and determine DMRS port information allocated to the first PUSCH transmission occasion and DMRS port information allocated to the second PUSCH transmission occasion according to the RANK combinations supported by the two PUSCH transmission occasions and the DMRS port set allocated for the terminal indicated by the antenna port indication field.

In another implementation, there are two PUSCH transmission occasions for the PUSCH associated with different panels to different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion. In the embodiments of the present disclosure, the terminal may determine DMRS port information allocated to the first PUSCH transmission occasion and DMRS port information allocated to the second PUSCH transmission occasion in a pre-defined manner according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set. In the embodiments of the present disclosure, the terminal may determine DMRS port information allocated to the first PUSCH transmission occasion and DMRS port information allocated to the second PUSCH transmission occasion according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, the DMRS port set allocated for the terminal indicated by the antenna port indication field, and the DMRS port occupied by the first PUSCH transmission occasion indicated by the additional indication information.

By implementing the embodiments of the present disclosure, the network device may allocate the DMRS port allocation information for indicating the plurality of DMRS ports for the multi-panel based terminal, so that the terminal may determine the DMRS port information corresponding to the PUSCH transmission occasions associated with different panels towards different TRPs using different beams, which may realize the enhancement of the flexible allocation indication of the DMRS port that may support the SU-MIMO and the MU-MIMO in the SDM transmission multiplexing mode, provide a solution of the uplink STxMP based on single DCI, and solve the problem of how to support a higher throughput and a more reliable transmission performance by the uplink simultaneous transmission with multiple panels or multiple TRPs in the uplink enhancement of the version Rel-18.

In the embodiments of the present disclosure, the methods in the embodiments of the present disclosure are introduced respectively from the perspective of a terminal and the perspective of a network device. In order to perform various functions in the embodiments of the present disclosure, the terminal and the network device may include a hardware structure, and a software module. The above functions are implemented in a form of the hardware structure, the software module, or the software structure plus the hardware module. One of these functions may be implemented in a form of the hardware structure, the software module, or the hardware structure plus the software module.

Please refer to FIG. 12, which is a block diagram of a communication apparatus 120 according to the embodiments of the present disclosure. The communication apparatus 120 shown in FIG. 12 may include a transceiver module 1201 and a processing module 1202. The transceiver module 1201 may include a transmitting module and/or a receiving module, in which the transmitting module is used to perform the transmitting function, the receiving module is used to perform the receiving function, and the transceiver module 1201 may perform the transmitting function and/or receiving function.

The communication apparatus 120 may be a terminal, an apparatus in a terminal, or an apparatus capable of being used in conjunction with a terminal. Or, the communication apparatus 120 may be a network device, a device in a network device, or an apparatus capable of being used in conjunction with a network device.

When the communication apparatus 120 is a terminal, the transceiver module 1201 is configured to receive DMRS port allocation information for indicating a plurality of DMRS ports , based on uplink STxMP in an SDM mode scheduled by single DCI, in which the DMRS port allocation information is allocated by a network device for the terminal with multiple panels according to a DMRS port allocation table, the DMRS port allocation information is configured to determine DMRS port information corresponding to PUSCH transmission occasions associated with different panels towards different TRPs using different beams, in which the DMRS port information corresponding to the PUSCH transmission occasions associated with different panels towards different TRPs using different beams belongs to a same CDM group or different CDM groups.

In one implementation, the single DCI further includes an antenna port indication field, and the antenna port indication field indicates a total number of transmission RANKs for transmitting a PUSCH, and the total number of RANKs is greater than 1; and the processing module 1202 determines DMRS port information configured for the PUSCH at the PUSCH transmission occasions associated with different panels towards different TRPs using different beams according to the antenna port indication field and the DMRS port allocation information.

In one possible implementation, there are two PUSCH transmission occasions for the PUSCH associated with different panels towards different TRPs using different beams, and the DMRS port allocation information includes at least a DMRS port set allocated for the terminal. The processing module 1202 is specifically configured to determine a number of DMRS ports allocated to a first PUSCH transmission occasion and a number of DMRS ports allocated to a second PUSCH transmission occasion in sequence in a default manner according to the DMRS port set, in which the two PUSCH transmission occasions do not support a first RANK combination, and the total number of RANKs indicated by the antenna port indication field is 2 or 4.

In one possible implementation, there are two PUSCH transmission occasions for the PUSCH associated with different panels to different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions. The processing module 1202 is specifically configured to determine a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions do not support a first RANK combination, and the total number of RANKs indicated by the antenna port indication field is 3.

In one possible implementation, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions.

There are two PUSCH transmission occasions for the PUSCH associated with different panels towards different TRPs using different beams. The processing module 1202 is specifically configured to determine a number of DMRS ports allocated to a first PUSCH transmission occasion and a number of DMRS ports allocated to a second PUSCH transmission occasion according to the DMRS port set and the mapping relationship, when the plurality of DMRS ports are allocated in sequence to the first and second PUSCH transmission occasions, in which the two PUSCH transmission occasions do not support a first RANK combination, and the total number of RANKs indicated by the antenna port indication field is 3.

In one possible implementation, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

There are two PUSCH transmission occasions for the PUSCH associated with different panels towards different TRPs using different beams. The processing module 1202 is specifically configured to determine DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which two PUSCH transmission occasions do not support a first RANK combination, and the total number of RANKs indicated by the antenna port indication field is 3.

In one implementation, there are two PUSCH transmission occasions for the PUSCH associated with different panels towards different TRPs using different beams, and the DMRS port allocation information includes at least a DMRS port set allocated for the terminal. The processing module 1202 is specifically configured to determine a number of DMRS ports allocated to a first PUSCH transmission occasion and a number of DMRS ports allocated to a second PUSCH transmission occasion in sequence in a default manner according to the DMRS port set, in which the two PUSCH transmission occasions support a first RANK combination, and the total number of RANKs indicated by the antenna port indication field is 2.

In one implementation, there are two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions. The processing module 1202 is specifically configured to determine a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions support a first RANK combination, and the total number of RANKs indicated by the antenna port indication field is 3 or 4.

There are two PUSCH transmission occasions for the PUSCH associated with different panels to different TRPs using different beams. The processing module 1202 is specifically configured to determine a number of DMRS ports allocated to a first PUSCH transmission occasion and a number of DMRS ports allocated to a second PUSCH transmission occasion according to the DMRS port set and the mapping relationship, when the plurality of DMRS ports are allocated in sequence to the first and second PUSCH transmission occasions, in which the two PUSCH transmission occasions support a first RANK combination, and the total number of RANKs indicated by the antenna port indication field is 3 or 4.

There are two PUSCH transmission occasions for the PUSCH associated with different panels to different TRPs using different beams. The processing module 1202 is specifically configured to determine DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which the two PUSCH transmission occasions support a first RANK combination, and the total number of RANKs indicated by the antenna port indication field is 3 or 4.

In one possible implementation, the first RANK combination is a RANK combination of 1+3 or a RANK combination of 3+1.

In one implementation, the single DCI further includes at least one indication field for SRI and/or TPMI, and an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one possible implementation, the processing module 1202 is further configured to determine DMRS port information configured for the PUSCH at PUSCH transmission occasions associated with different panels towards different TRPs using different beams according to the at least one indication field for SRI and/or TPMI and the antenna port indication field.

In one possible implementation, there are two PUSCH transmission occasions for the PUSCH associated with different panels to different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second indication field for SRI and/or TPMI indicates a number of RANKs corresponding to a second PUSCH transmission occasion.

The processing module 1202 is specifically configured to determine RANK combinations supported by the two PUSCH transmission occasions according to the number of RANKs corresponding to the first PUSCH transmission occasion indicated by the first indication field for SRI and/or TPMI and the number of RANKs corresponding to the second PUSCH transmission occasion indicated by the second indication field for SRI and/or TPMI; and determine DMRS port information allocated to the first PUSCH transmission occasion and DMRS port information allocated to the second PUSCH transmission occasion according to the RANK combinations supported by the two PUSCH transmission occasions and the DMRS port set allocated for the terminal indicated by the antenna port indication field.

In one possible implementation, there are two PUSCH transmission occasions for the PUSCH associated with different panels to different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

The processing module 1202 is further configured to determine DMRS port information allocated to the first PUSCH transmission occasion and DMRS port information allocated to the second PUSCH transmission occasion in a pre-defined manner according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set.

The processing module 1202 is specifically configured to determine DMRS port information allocated to the first PUSCH transmission occasion and DMRS port information allocated to the second PUSCH transmission occasion according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, the DMRS port set allocated for the terminal indicated by the antenna port indication field, and the DMRS port occupied by the first PUSCH transmission occasion indicated by the additional indication information.

When the communication device 120 is a network device, the processing module 1202 is configured to allocate DMRS port allocation information for indicating a plurality of DMRS ports, in which the DMRS port allocation information is allocated for a terminal with multiple panels according to a DMRS port allocation table; and the transceiver module 1201 is configured to send single DCI to the terminal, in which the single DCI includes the DMRS port allocation information, and the DMRS port allocation information is configured to determine DMRS port information corresponding to PUSCH transmission occasions associated with different panels towards different TRPs using different beams, in which the DMRS port information corresponding to the PUSCH transmission occasions associated with different panels towards different TRPs using different beams belongs to a same CDM group or different CDM groups.

In one implementation, the single DCI further includes an antenna port indication field, and the antenna port indication field indicates a total number of transmission RANKs for transmitting a PUSCH, and the total number of RANKs is greater than 1.

In one possible implementation, there are two PUSCH transmission occasions for the PUSCH associated with different panels towards different TRPs using different beams, and the DMRS port allocation information includes at least a DMRS port set allocated for the terminal.

In one possible implementation, there are two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions.

In one possible implementation, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions.

In one possible implementation, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

In one possible implementation, the single DCI further includes at least one indication field for SRI and/or TPMI, and an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one possible implementation, there are two PUSCH transmission occasions for the PUSCH associated with different panels towards different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second SRI and/or a second TPMI indication field indicates a number of RANKs corresponding to a second PUSCH transmission occasion.

In one possible implementation, there are two PUSCH transmission occasions for the PUSCH associated with different panels towards different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set.

With respect to the device in the above embodiments, the specific way in which each module performs an operation has been described in detail in the embodiments relating to the method and will not be repeated herein.

Please refer to FIG. 13, which is a block diagram of another communication device according to the embodiments of the present disclosure. The communication device 130 may be a network device, a terminal, or a chip, a chip system, a processor, etc. supporting the network device to implement the above method, or a chip, a system on a chip, a chip system, a processor, etc. supporting the terminal to implement the above method. The device may be used to implement the methods in the above method embodiments, which is described in the above method embodiments.

The communication device 130 may include one or more processors 1301. The processor 1301 may be a general purpose processor or a special purpose processor. For example, it may be a baseband processor or a central processing unit. The baseband processor may be used to process communication protocols and communication data, and the central processing unit may be used to control communication devices (such as a base station, a baseband chip, a terminal, a terminal chip, a DU or a CU, etc.), to execute computer programs, and process computer program data.

Optionally, the communication device 130 may also include one or more memories 1302 for storing a computer program 1304 and the processor 1301 executes the computer program 1304 to cause the communication device 130 to implement the method in the above method embodiments. Optionally, the memory 1302 may also store data. The communication device 130 and the memory 1302 may be set up separately or integrated together.

Optionally, the communication device 130 may also include a transceiver 1305 and an antenna 1306. The transceiver 1305 may be called a transceiver unit, a transceiver machine, or a transceiver circuit, etc. to perform transceiving function. The transceiver 1305 may include a receiver and a transmitter, in which the receiver may be called a receiving machine or a receiving circuit, etc. to perform the receiving function; the transmitter may be called a transmitting machine or a transmitting circuit, etc. to perform the transmitting function.

Optionally, the communication device 130 may also include one or more interface circuits 1307. The interface circuit 1307 is configured to receive code instructions and transmit the code instructions to the processor 1301. When the processor 1301 executes the code instructions, the communication device 130 is caused to implement the method in the above method embodiments.

When the communication device 130 is a terminal, the processor 1301 is used to perform the step 902 in the FIG. 9 and the step 1002 in the FIG. 10. The transceiver 1305 is used to perform the step 801 in the FIG. 8, the step 901 in the FIG. 9, and the step 1001 in the FIG. 10.

When the communication device 130 is a network device, the transceiver 1305 is used to perform the step 1102 in the FIG. 11. The processor 1301 is used to perform the step 1101 the FIG. 11.

In one implementation, the processor 1301 may include a transceiver for performing the receiving function and the sending function. For example, the transceiver may be a transceiver circuit, or an interface, or an interface circuit. The transceiver circuit, the interface, or the interface circuit used to perform the receiving function and the sending function may be separate or integrated. The transceiver circuit, the interface, or the interface circuit may be used to read and write code/data, or the transceiver circuit, the interface, or the interface circuit may be used to transmit signals.

In one implementation, the processor 1301 may store a computer program. When the computer program is running on the processor 1301, the communication device 130 is caused to implement the method in the above method embodiments. The computer program may be solidified in the processor 1301, in which case the processor 1301 may be implemented by hardware.

In an implementation, the communication device 130 includes a circuit that may implement the sending or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal (such as the terminal in the method embodiments), but the scope of the communication device in the disclosure is not limited to this, and the structure of the communication device may not be restricted by FIG. 13. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

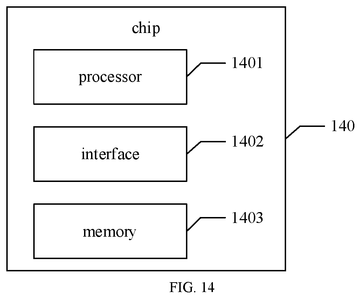

For the case where the communication device may be a chip or a chip system, please refer to the structural diagram of a chip in FIG. 14. The chip illustrated in FIG. 14 includes a processor 1401 and an interface 1402. There may be one or more processors 1401, and there may be one or more interfaces 1401.

For the case where the chip is used to perform the functions of the terminal in the embodiments of the present disclosure:
The interface 1402 is configured to receive DMRS port allocation information for indicating a plurality of DMRS ports , based on uplink STxMP in an SDM mode scheduled by single DCI, in which the DMRS port allocation information is allocated by a network device for the terminal with multiple panels according to a DMRS port allocation table, the DMRS port allocation information is configured to determine DMRS port information corresponding to PUSCH transmission occasions associated with different panels towards different TRPs using different beams, in which the DMRS port information corresponding to the PUSCH transmission occasions associated with different panels towards different TRPs using different beams belongs to a same CDM group or different CDM groups.

In one implementation, the single DCI further includes an antenna port indication field, and the antenna port indication field indicates a total number of transmission RANKs for transmitting a PUSCH, and the total number of RANKs is greater than 1. The processor 1401 is configured to determine DMRS port information configured for the PUSCH at the PUSCH transmission occasions associated with different panels towards different TRPs using different beams according to the antenna port indication field and the DMRS port allocation information.

In one possible implementation, there are two PUSCH transmission occasions for the PUSCH associated with different panels towards different TRPs using different beams, and the DMRS port allocation information includes at least a DMRS port set allocated for the terminal. The processor 1401 is specifically configured to determine a number of DMRS ports allocated to a first PUSCH transmission occasion and a number of DMRS ports allocated to a second PUSCH transmission occasion in sequence in a default manner according to the DMRS port set, in which the two PUSCH transmission occasions do not support a first RANK combination, and the total number of RANKs indicated by the antenna port indication field is 2 or 4.

In one possible implementation, there are two PUSCH transmission occasions for the PUSCH associated with different panels to different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions. The processor 1401 is specifically configured to determine a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions do not support a first RANK combination, and the total number of RANKs indicated by the antenna port indication field is 3.

In one possible implementation, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions.

There are two PUSCH transmission occasions for the PUSCH associated with different panels towards different TRPs using different beams. The processor 1401 is specifically configured to determine a number of DMRS ports allocated to a first PUSCH transmission occasion and a number of DMRS ports allocated to a second PUSCH transmission occasion according to the DMRS port set and the mapping relationship, when the plurality of DMRS ports are allocated in sequence to the first and second PUSCH transmission occasions, in which the two PUSCH transmission occasions do not support a first RANK combination, and the total number of RANKs indicated by the antenna port indication field is 3.

In one possible implementation, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

There are two PUSCH transmission occasions for the PUSCH associated with different panels towards different TRPs using different beams. The processor 1401 is specifically configured to determine DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which two PUSCH transmission occasions do not support a first RANK combination, and the total number of RANKs indicated by the antenna port indication field is 3.

In one implementation, there are two PUSCH transmission occasions for the PUSCH associated with different panels towards different TRPs using different beams, and the DMRS port allocation information includes at least a DMRS port set allocated for the terminal. The processor 1401 is specifically configured to determine a number of DMRS ports allocated to a first PUSCH transmission occasion and a number of DMRS ports allocated to a second PUSCH transmission occasion in sequence in a default manner according to the DMRS port set, in which the two PUSCH transmission occasions support a first RANK combination, and the total number of RANKs indicated by the antenna port indication field is 2.

In one implementation, there are two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions. The processor 1401 is specifically configured to determine a number of DMRS ports allocated to a first PUSCH transmission occasion and a number of DMRS ports allocated to a second PUSCH transmission occasion in a default pre-defined manner according to the DMRS port set and the mapping relationship, in which the two PUSCH transmission occasions support a first RANK combination, and the total number of RANKs indicated by the antenna port indication field is 3 or 4.

There are two PUSCH transmission occasions for the PUSCH associated with different panels to different TRPs using different beams. The processor 1401 is specifically configured to determine a number of DMRS ports allocated to a first PUSCH transmission occasion and a number of DMRS ports allocated to a second PUSCH transmission occasion according to the DMRS port set and the mapping relationship, when the plurality of DMRS ports are allocated in sequence to the first and second PUSCH transmission occasions, in which the two PUSCH transmission occasions support a first RANK combination, and the total number of RANKs indicated by the antenna port indication field is 3 or 4.

There are two PUSCH transmission occasions for the PUSCH associated with different panels to different TRPs using different beams. The processor 1401 is specifically configured to determine DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, in which the two PUSCH transmission occasions support a first RANK combination, and the total number of RANKs indicated by the antenna port indication field is 3 or 4.

In one possible implementation, the first RANK combination is a RANK combination of 1+3 or a RANK combination of 3+1.

In one implementation, the single DCI further includes at least one indication field for SRI and/or TPMI, and an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one possible implementation, the processor 1401 is further configured to determine DMRS port information configured for the PUSCH at PUSCH transmission occasions associated with different panels towards different TRPs using different beams according to the at least one indication field for SRI and/or TPMI and the antenna port indication field.

In one possible implementation, there are two PUSCH transmission occasions for the PUSCH associated with different panels to different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second indication field for SRI and/or TPMI indicates a number of RANKs corresponding to a second PUSCH transmission occasion.

The processor 1401 is specifically configured to determine RANK combinations supported by the two PUSCH transmission occasions according to the number of RANKs corresponding to the first PUSCH transmission occasion indicated by the first indication field for SRI and/or TPMI and the number of RANKs corresponding to the second PUSCH transmission occasion indicated by the second indication field for SRI and/or TPMI; and determine DMRS port information allocated to the first PUSCH transmission occasion and DMRS port information allocated to the second PUSCH transmission occasion according to the RANK combinations supported by the two PUSCH transmission occasions and the DMRS port set allocated for the terminal indicated by the antenna port indication field.

In one possible implementation, there are two PUSCH transmission occasions for the PUSCH associated with different panels to different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

The processor 1401 is specifically configured to determine DMRS port information allocated to the first PUSCH transmission occasion and DMRS port information allocated to the second PUSCH transmission occasion in a pre-defined manner according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set.

The processor 1401 is specifically configured to determine DMRS port information allocated to the first PUSCH transmission occasion and DMRS port information allocated to the second PUSCH transmission occasion according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, the DMRS port set allocated for the terminal indicated by the antenna port indication field, and the DMRS port occupied by the first PUSCH transmission occasion indicated by the additional indication information.

For the case where the chip is used to perform the functions of the network device in the embodiments of the present disclosure:
The processor 1401 is configured to allocate DMRS port allocation information for indicating a plurality of DMRS ports, in which the DMRS port allocation information is allocated for a terminal with multiple panels according to a DMRS port allocation table; and the interface 1402 is configured to send single DCI to the terminal, in which the single DCI includes the DMRS port allocation information, and the DMRS port allocation information is configured to determine DMRS port information corresponding to PUSCH transmission occasions associated with different panels towards different TRPs using different beams, in which the DMRS port information corresponding to the PUSCH transmission occasions associated with different panels towards different TRPs using different beams belongs to a same CDM group or different CDM groups.

In one implementation, the single DCI further includes an antenna port indication field, and the antenna port indication field indicates a total number of transmission RANKs for transmitting a PUSCH, and the total number of RANKs is greater than 1.

In one possible implementation, there are two PUSCH transmission occasions for the PUSCH associated with different panels towards different TRPs using different beams, and the DMRS port allocation information includes at least a DMRS port set allocated for the terminal.

In one possible implementation, there are two PUSCH transmission occasions for the PUSCH associated with different panels towards different TRPs using different beams, the DMRS port allocation information includes at least a DMRS port set allocated for the terminal, and index values of DMRS ports in the DMRS port set has a mapping relationship with RANK combinations supported by a plurality of PUSCH transmission occasions.

In one possible implementation, the DMRS port allocation information includes at least: a DMRS port set allocated for the terminal; and additional indication information, in which the additional indication information indicates a mapping relationship between index values of DMRS ports in the DMRS port set and RANK combinations supported by a plurality of PUSCH transmission occasions.

In one possible implementation, the DMRS port allocation information includes at least: a DMRS port set allocated for the terminal; and additional indication information, in which the additional indication information indicates a DMRS port occupied by a first PUSCH transmission occasion, and the DMRS port occupied by the first PUSCH transmission occasion belongs to the DMRS port set.

In one possible implementation, the single DCI further includes at least one indication field for SRI and/or TPMI, and an antenna port indication field, in which the at least one indication field for SRI and/or TPMI indicates a RANK combination corresponding to an actual PUSCH transmission corresponding to a plurality of PUSCH transmission occasions; and the antenna port indication field indicates a total DMRS port set allocated for the terminal.

In one possible implementation, there are two PUSCH transmission occasions for the PUSCH associated with different panels towards different TRPs using different beams, and the at least one indication field for SRI and/or TPMI includes two indication fields for SRI and/or TPMI, in which a first indication field for SRI and/or TPMI indicates a number of RANKs corresponding to a first PUSCH transmission occasion; and a second SRI and/or a second TPMI indication field indicates a number of RANKs corresponding to a second PUSCH transmission occasion.

In one possible implementation, there are two PUSCH transmission occasions for the PUSCH associated with different panels towards different TRPs using different beams, and the at least one indication field for SRI and/or TPMI includes one indication field for SRI and/or TPMI, in which a codepoint of the one indication field for SRI and/or TPMI indicates two valid SRIs and/or two valid TPMIs, in which a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

In one possible implementation, the DMRS port allocation information includes at least additional indication information, and the additional indication information indicates a DMRS port occupied by the first PUSCH transmission occasion, in which the DMRS port occupied by the first PUSCH transmission occasion belongs to the DMRS port set.

Optionally, the chip also includes the memory 1403, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above functions, but such implementation shall not be regarded as going beyond the scope of the protection of the embodiments of the present disclosure.

The embodiments of the present disclosure also provide a system for determining a sidelink duration that includes a communication device as a terminal and a communication device as a network device in the above embodiments in the FIG. 12, or the system includes a communication device as a terminal and a communication device as a network device in the above embodiments in the FIG. 13.

The embodiments of the present disclosure also provide a readable storage medium for storing instructions. When the instructions are executed by a computer, the function of any one of the above method embodiments is performed.

The embodiments of the present disclosure also provide a computer program product. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or pre-defined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Pre-defined in the disclosure may be understood as defined, pre-defined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for determining an uplink demodulation reference signal (DMRS) port, executed by a terminal with multiple panels, comprising:
receiving DMRS port allocation information for indicating a plurality of DMRS ports , based on uplink simultaneous transmission via multi-panel (STxMP) in a space division multiplexing (SDM) mode scheduled by single downlink control information (DCI), wherein the DMRS port allocation information is allocated by a network device for the terminal according to a DMRS port allocation table,
wherein the DMRS port allocation information is configured to determine DMRS port information corresponding to physical uplink shared channel (PUSCH) transmission occasions associated with different panels towards different transmission reception points (TRPs) using different beams, wherein the DMRS port information corresponding to the PUSCH transmission occasions associated with different panels towards different TRPs using different beams belongs to a same code division multiplexing (CDM) group or different CDM groups.

2. The method of claim 1, wherein the single DCI further comprises an antenna port indication field, and the antenna port indication field indicates a total number of transmission ranks (RANKs) for transmitting a PUSCH, and the total number of RANKs is greater than 1; and the method further comprises:
determining DMRS port information configured for the PUSCH at the PUSCH transmission occasions associated with different panels towards different TRPs using different beams according to the antenna port indication field and the DMRS port allocation information.

3. The method of claim 2, wherein there are two PUSCH transmission occasions for the PUSCH associated with different panels towards different TRPs using different beams, and the DMRS port allocation information comprises at least a DMRS port set allocated for the terminal, wherein determining the DMRS port information configured for the PUSCH at the PUSCH transmission occasions associated with different panels towards different TRPs using different beams according to the antenna port indication field and the DMRS port allocation information, comprises:
determining a number of DMRS ports allocated to a first PUSCH transmission occasion and a number of DMRS ports allocated to a second PUSCH transmission occasion in sequence in a default manner according to the DMRS port set, wherein the two PUSCH transmission occasions do not support a first RANK combination, and the total number of RANKs indicated by the antenna port indication field is 2 or 4.

4. The method of claim 2, wherein there are two PUSCH transmission occasions for the PUSCH associated with different panels to different TRPs using different beams, the DMRS port allocation information comprises at least a DMRS port set allocated for the terminal, and index values of DMRS ports in the DMRS port set has a mapping relationship with RANK combinations supported by a plurality of PUSCH transmission occasions, wherein determining the DMRS port information configured for the PUSCH at the PUSCH transmission occasions associated with different panels towards different TRPs using different beams according to the antenna port indication field and the DMRS port allocation information, comprises:
determining a number of DMRS ports allocated to a first PUSCH transmission occasion and a number of DMRS ports allocated to a second PUSCH transmission occasion in a default pre-defined manner according to the DMRS port set and the mapping relationship, wherein the two PUSCH transmission occasions do not support a first RANK combination, and the total number of RANKs indicated by the antenna port indication field is 3.

5. The method of claim 2, wherein the DMRS port allocation information comprises at least:
a DMRS port set allocated for the terminal; and
additional indication information, wherein the additional indication information indicates a mapping relationship between index values of DMRS ports in the DMRS port set and RANK combinations supported by a plurality of PUSCH transmission occasions.

6. The method of claim 5, wherein there are two PUSCH transmission occasions for the PUSCH associated with different panels towards different TRPs using different beams, wherein determining the DMRS port information configured for the PUSCH at the PUSCH transmission occasions associated with different panels towards different TRPs using different beams according to the antenna port indication field and the DMRS port allocation information, comprises:
determining a number of DMRS ports allocated to a first PUSCH transmission occasion and a number of DMRS ports allocated to a second PUSCH transmission occasion in sequence according to the DMRS port set and the mapping relationship, wherein the two PUSCH transmission occasions do not support a first RANK combination, and the total number of RANKs indicated by the antenna port indication field is 3.

7. The method of claim 2, wherein the DMRS port allocation information comprises at least:
a DMRS port set allocated for the terminal; and
additional indication information, wherein the additional indication information indicates a DMRS port occupied by a first PUSCH transmission occasion, and the DMRS port occupied by the first PUSCH transmission occasion belongs to the DMRS port set.

8. The method of claim 7, wherein there are two PUSCH transmission occasions for the PUSCH associated with different panels towards different TRPs using different beams, wherein determining the DMRS port information configured for the PUSCH at the PUSCH transmission occasions associated with different panels towards different TRPs using different beams according to the antenna port indication field and the DMRS port allocation information, comprises:
determining DMRS port information allocated to the first PUSCH transmission occasion and DMRS port information allocated to a second PUSCH transmission occasion according to the DMRS port set and the DMRS port occupied by the first PUSCH transmission occasion indicated by the additional indication information, wherein two PUSCH transmission occasions do not support a first RANK combination, and the total number of RANKs indicated by the antenna port indication field is 3.

9. The method of claim 2, wherein there are two PUSCH transmission occasions for the PUSCH associated with different panels towards different TRPs using different beams, and the DMRS port allocation information comprises at least a DMRS port set allocated for the terminal, wherein determining the DMRS port information configured for the PUSCH at the PUSCH transmission occasions associated with different panels towards different TRPs using different beams according to the antenna port indication field and the DMRS port allocation information, comprises:
determining a number of DMRS ports allocated to a first PUSCH transmission occasion and a number of DMRS ports allocated to a second PUSCH transmission occasion in sequence in a default manner according to the DMRS port set, wherein the two PUSCH transmission occasions support a first RANK combination, and the total number of RANKs indicated by the antenna port indication field is 2.

10. The method of claim 2, wherein there are two PUSCH transmission occasions for the PUSCH associated with different panels towards different TRPs using different beams, the DMRS port allocation information comprises at least a DMRS port set allocated for the terminal, and index values of DMRS ports in the DMRS port set has a mapping relationship with RANK combinations supported by a plurality of PUSCH transmission occasions, wherein determining the DMRS port information configured for the PUSCH at the PUSCH transmission occasions associated with different panels towards different TRPs using different beams according to the antenna port indication field and the DMRS port allocation information, comprises:
determining a number of DMRS ports allocated to a first PUSCH transmission occasion and a number of DMRS ports allocated to a second PUSCH transmission occasion in a default pre-defined manner according to the DMRS port set and the mapping relationship, wherein the two PUSCH transmission occasions support a first RANK combination, and the total number of RANKs indicated by the antenna port indication field is 3 or 4.

11. The method of claim 5, wherein there are two PUSCH transmission occasions for the PUSCH associated with different panels to different TRPs using different beams, wherein determining the DMRS port information configured for the PUSCH at the PUSCH transmission occasions associated with different panels towards different TRPs using different beams according to the antenna port indication field and the DMRS port allocation information, comprises:
determining a number of DMRS ports allocated to a first PUSCH transmission occasion and a number of DMRS ports allocated to a second PUSCH transmission occasion in sequence according to the DMRS port set and the mapping relationship, wherein the two PUSCH transmission occasions support a first RANK combination, and the total number of RANKs indicated by the antenna port indication field is 3 or 4.

12. The method of claim 7, wherein there are two PUSCH transmission occasions for the PUSCH associated with different panels to different TRPs using different beams, wherein determining the DMRS port information configured for the PUSCH at the PUSCH transmission occasions associated with different panels towards different TRPs using different beams according to the antenna port indication field and the DMRS port allocation information, comprises:
determining DMRS port information allocated to the first PUSCH transmission occasion and DMRS port information allocated to the second PUSCH transmission occasion according to the DMRS port set and the DMRS port occupied by the first PUSCH transmission occasion indicated by the additional indication information, wherein the two PUSCH transmission occasions support a first RANK combination, and the total number of RANKs indicated by the antenna port indication field is 3 or 4.

13. The method of any one of claims 3 to 4, 6, or 8 to 12, wherein the first RANK combination is a RANK combination of 1+3 or a RANK combination of 3+1.

14. The method of claim 1, wherein the single DCI further comprises at least one indication field for sounding reference signal (SRS) resource indicator (SRI) and/or transmitted precoding matrix indicator (TPMI), or an antenna port indication field, wherein
the at least one indication field for SRI and/or TPMI indicates a RANK combination corresponding to an actual PUSCH transmission corresponding to a plurality of PUSCH transmission occasions; and
the antenna port indication field indicates a total DMRS port set allocated for the terminal.

15. The method of claim 14, comprising:
determining DMRS port information configured for the PUSCH at PUSCH transmission occasions associated with different panels towards different TRPs using different beams according to the at least one indication field for SRI and/or TPMI and the antenna port indication field.

16. The method of claim 15, wherein there are two PUSCH transmission occasions for the PUSCH associated with different panels to different TRPs using different beams, and the at least one indication field for SRI and/or TPMI comprises two indication fields for SRI and/or TPMI, wherein a first indication field for SRI and/or TPMI indicates a number of RANKs corresponding to a first PUSCH transmission occasion; and a second indication field for SRI and/or TPMI indicates a number of RANKs corresponding to a second PUSCH transmission occasion.

17. The method of claim 16, wherein determining DMRS port information configured for the PUSCH at PUSCH transmission occasions associated with different panels towards different TRPs using different beams according to the at least one indication field for SRI and/or TPMI and the antenna port indication field comprises:
determining RANK combinations supported by the two PUSCH transmission occasions according to the number of RANKs corresponding to the first PUSCH transmission occasion indicated by the first indication field for SRI and/or TPMI and the number of RANKs corresponding to the second PUSCH transmission occasion indicated by the second indication field for SRI and/or TPMI; and
determining DMRS port information allocated to the first PUSCH transmission occasion and DMRS port information allocated to the second PUSCH transmission occasion according to the RANK combinations supported by the two PUSCH transmission occasions and the DMRS port set allocated for the terminal indicated by the antenna port indication field.

18. The method of claim 15, wherein there are two PUSCH transmission occasions for the PUSCH associated with different panels to different TRPs using different beams, and the at least one indication field for SRI and/or TPMI comprises one indication field for SRI and/or TPMI,
wherein a codepoint of the one indication field for SRI and/or TPMI indicates two valid SRIs and/or two valid TPMIs, wherein a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

19. The method of claim 18, wherein determining DMRS port information configured for the PUSCH at PUSCH transmission occasions associated with different panels towards different TRPs using different beams according to the at least one indication field for SRI and/or TPMI and the antenna port indication field comprises:
determining DMRS port information allocated to the first PUSCH transmission occasion and DMRS port information allocated to the second PUSCH transmission occasion in a pre-defined manner according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, and the DMRS port set allocated for the terminal indicated by the antenna port indication field.

20. The method of claim 18, wherein the DMRS port allocation information comprises at least additional indication information, and the additional indication information indicates a DMRS port occupied by the first PUSCH transmission occasion, wherein the DMRS port occupied by the first PUSCH transmission occasion belongs to the DMRS port set.

21. The method of claim 20, wherein determining DMRS port information configured for the PUSCH at PUSCH transmission occasions associated with different panels towards different TRPs using different beams according to the at least one indication field for SRI and/or TPMI and the antenna port indication field comprises:
determining DMRS port information allocated to the first PUSCH transmission occasion and DMRS port information allocated to the second PUSCH transmission occasion according to the number of RANKs corresponding to the first PUSCH transmission occasion indicated by the first valid SRI and/or the first valid TPMI, the number of RANKs corresponding to the second PUSCH transmission occasion indicated by the second valid SRI and/or the second valid TPMI, the DMRS port set allocated for the terminal indicated by the antenna port indication field, and the DMRS port occupied by the first PUSCH transmission occasion indicated by the additional indication information.

22. A method for determining an uplink demodulation reference signal (DMRS) port, executed by a network device, comprising:
allocating DMRS port allocation information for indicating a plurality of DMRS ports, wherein the DMRS port allocation information is allocated for a terminal with multiple panels according to a DMRS port allocation table; and
sending single downlink control information (DCI) to the terminal, wherein the single DCI comprises the DMRS port allocation information, and the DMRS port allocation information is configured to determine DMRS port information corresponding to physical uplink shared channel (PUSCH) transmission occasions associated with different panels towards different transmission reception points (TRPs) using different beams, wherein the DMRS port information corresponding to the PUSCH transmission occasions associated with different panels towards different TRPs using different beams belongs to a same code division multiplexing (CDM) group or different CDM groups.

23. The method of claim 22, wherein the single DCI further comprises an antenna port indication field, and the antenna port indication field indicates a total number of transmission ranks (RANKs) for transmitting a PUSCH, and the total number of RANKs is greater than 1.

24. The method of claim 23, wherein there are two PUSCH transmission occasions for the PUSCH associated with different panels towards different TRPs using different beams, and the DMRS port allocation information comprises at least a DMRS port set allocated for the terminal.

25. The method of claim 23, wherein there are two PUSCH transmission occasions for the PUSCH associated with different panels towards different TRPs using different beams, the DMRS port allocation information comprises at least a DMRS port set allocated for the terminal, and index values of DMRS ports in the DMRS port set has a mapping relationship with RANK combinations supported by a plurality of PUSCH transmission occasions.

26. The method of claim 23, wherein the DMRS port allocation information comprises at least:
a DMRS port set allocated for the terminal; and
additional indication information, wherein the additional indication information indicates a mapping relationship between index values of DMRS ports in the DMRS port set and RANK combinations supported by a plurality of PUSCH transmission occasions.

27. The method of claim 23, wherein the DMRS port allocation information comprises at least:
a DMRS port set allocated for the terminal; and
additional indication information, wherein the additional indication information indicates a DMRS port occupied by a first PUSCH transmission occasion, and the DMRS port occupied by the first PUSCH transmission occasion belongs to the DMRS port set.

28. The method of claim 22, wherein the single DCI further comprises at least one indication field for sounding reference signal (SRS) resource indicator (SRI) and/or transmitted precoding matrix indicator (TPMI), or an antenna port indication field, wherein
the at least one indication field for SRI and/or TPMI indicates a RANK combination corresponding to an actual PUSCH transmission corresponding to a plurality of PUSCH transmission occasions; and
the antenna port indication field indicates a total DMRS port set allocated for the terminal.

29. The method of claim 28, wherein there are two PUSCH transmission occasions for the PUSCH associated with different panels towards different TRPs using different beams, and the at least one indication field for SRI and/or TPMI comprises two indication fields for SRI and/or TPMI, wherein a first indication field for SRI and/or TPMI indicates a number of RANKs corresponding to a first PUSCH transmission occasion; and a second SRI and/or a second TPMI indication field indicates a number of RANKs corresponding to a second PUSCH transmission occasion.

30. The method of claim 28, wherein there are two PUSCH transmission occasions for the PUSCH associated with different panels towards different TRPs using different beams, and the at least one indication field for SRI and/or TPMI comprises one indication field for SRI and/or TPMI, wherein a codepoint of the one indication field for SRI and/or TPMI indicates two valid SRIs and/or two valid TPMIs, wherein a first valid SRI and/or a first valid TPMI indicate a number of RANKs corresponding to a first PUSCH transmission occasion, and a second valid SRI and/or a second valid TPMI indicate a number of RANKs corresponding to a second PUSCH transmission occasion.

31. The method of claim 30, wherein the DMRS port allocation information comprises at least additional indication information, and the additional indication information indicates a DMRS port occupied by the first PUSCH transmission occasion, wherein the DMRS port occupied by the first PUSCH transmission occasion belongs to the DMRS port set.

32. A communication device, comprising:
a transceiver module, configured to receive DMRS port allocation information for indicating a plurality of DMRS ports, based on uplink simultaneous transmission via multi-panel (STxMP) in a space division multiplexing (SDM) mode scheduled by single downlink control information (DCI), wherein the DMRS port allocation information is allocated by a network device for the terminal according to a DMRS port allocation table
wherein the DMRS port allocation information is configured to determine DMRS port information corresponding to physical uplink shared channel (PUSCH) transmission occasions associated with different panels towards different transmission reception points (TRPs) using different beams, wherein the DMRS port information corresponding to the PUSCH transmission occasions associated with different panels towards different TRPs using different beams belongs to a same code division multiplexing (CDM) group or different CDM groups.

33. A communication device, comprising:
a processing module, configured to allocate DMRS port allocation information for indicating a plurality of DMRS ports, wherein the DMRS port allocation information is allocated for a terminal with multiple panels according to a DMRS port allocation table; and
a transceiver module, configured to send single downlink control information (DCI) to the terminal, wherein the single DCI comprises the DMRS port allocation information, and the DMRS port allocation information is configured to determine DMRS port information corresponding to physical uplink shared channel (PUSCH) transmission occasions associated with different panels towards different transmission reception points (TRPs) using different beams, wherein the DMRS port information corresponding to the PUSCH transmission occasions associated with different panels towards different TRPs using different beams belongs to a same code division multiplexing (CDM) group or different CDM groups.

34. A communication device, comprising a processor and a memory for storing a computer program, wherein when the computer program stored in the memory is executed by the processor, the device is caused to implement the method of any one of claims 1 to 21.

35. A communication device, comprising a processor and a memory for storing a computer program, wherein when the computer program stored in the memory is executed by the processor, the device is caused to implement the method of any one of claims 22 to 31.

36. A computer-readable storage medium for storing instructions, wherein when the instructions are executed, the method of any one of claims 1 to 21 is implemented.

37. A computer-readable storage medium for storing instructions, wherein when the instructions are executed, the method of any one of claims 22 to 31 is implemented.
